# EUROPEAN PATENT SPECIFICATION

(11) **EP 1 519 520 B1**
(45) Date of publication and mention of the grant of the patent: **06.04.2011**
(21) Application number: 03738596.0
(22) Date of filing: 30.06.2003
(51) Int. Cl.: H04L 12/56, H04L 12/24

(54) **MANAGEMENT NODE DEVICE, NODE DEVICE, NETWORK CONFIGURATION MANAGEMENT SYSTEM, NETWORK CONFIGURATION MANAGEMENT METHOD, NODE DEVICE CONTROL METHOD, MANAGEMENT NODE DEVICE CONTROL METHOD**
VERWALTUNGSKNOTENEINRICHTUNG, KNOTENEINRICHTUNG, NETZWERKKONFIGURATIONSVERWALTUNGSSYSTEM, NETZWERKKONFIGURATIONSVERWALTUNGSVERFAHREN, KNOTENEINRICHTUNGSSTEUERVERFAHREN, VERWALTUNGSKNOTENEINRICHTUNGSSTEUERVERFAHREN
DISPOSITIF A NOEUD DE GESTION, DISPOSITIF A NOEUD, SYSTEME ET PROCEDE DE GESTION DE LA CONFIGURATION DE RESEAUX, PROCEDE DE CONTROLE DU DISPOSITIF A NOEUD, PROCEDE DE CONTROLE DU DISPOSITIF A NOEUD DE GESTION

(30) Priority: 28.06.2002 JP 2002191012; 23.08.2002 JP 2002244034
(43) Date of publication of application: 30.03.2005
(73) Proprietor: NTT DoCoMo, Inc., Tokyo 100-6150 (JP)
(72) Inventor: KATO, Takeshi, c/o NTT DoCoMo, Inc., Tokyo 100-6150 (JP); ISHIKAWA, Norihiro, c/o NTT DoCoMo, Inc., Tokyo 100-6150 (JP); SUMINO, Hiromitsu, c/o NTT DoCoMo, Inc., Tokyo 100-6150 (JP); SUZUKI, Hideharu, c/o NTT DoCoMo, Inc., Tokyo 100-6150 (JP); UENO, Hidetoshi, c/o NTT DoCoMo, Inc., Tokyo 100-6150 (JP); OMATA, Eiji, c/o NTT DoCoMo, Inc., Tokyo 100-6150 (JP)
(74) Representative: Sparing Röhl Henseler Patentanwälte European Patent Attorneys
(86) International application number: PCT/JP2003/008294
(87) International publication number: WO 2004/004252

(56) References cited:
- EP-A- 0 915 594
- JP-A- 5 130 144
- JP-A- 10 243 026
- JP-A- 2001 244 930
- JP-A- 2001 251 343
- US-A- 5 031 093
- US-A- 5 115 495
- US-A- 5 654 958

## Description

### Technical Field

The present invention relates to a management node device, a network configuration management system and a network configuration management method, and in particular to a management node device for managing node devices constituting a network, and a network configuration management system and a network configuration management method using the management node device.

### Background Art

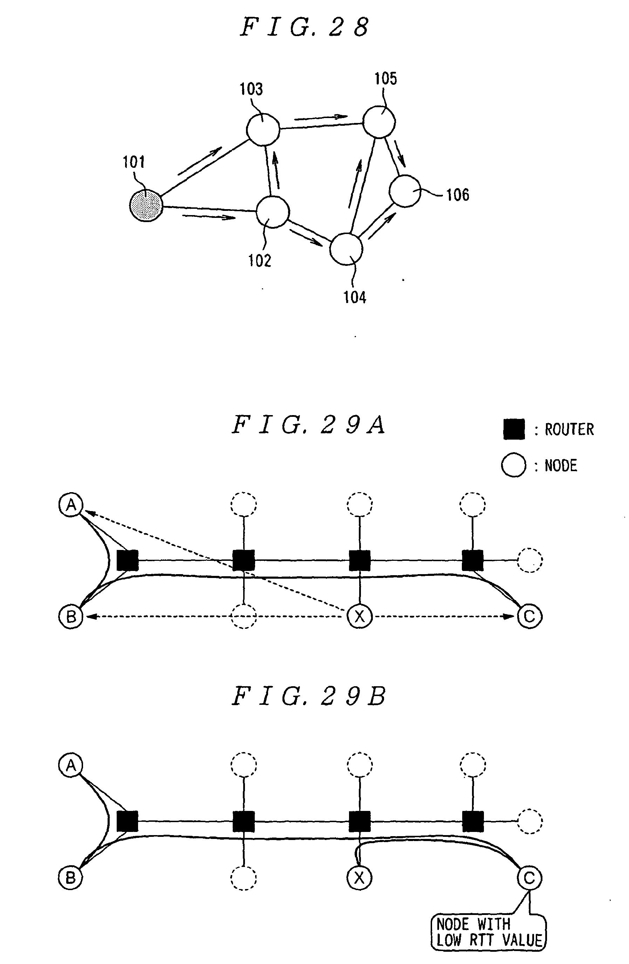

Figure 28 shows a network constituted by multiple node devices. Description will now be made on an example of communication condition of information about the node devices constituting the network, that is, network configuration information, with reference to the figure. In the description below, a node device may be referred to simply as a "node" for short.

In the figure, the network has six nodes 101 to 106. When network configuration information at the node 101 is changed, the changednetwork configuration information is communicated to the adjacent nodes 102 and 103.

The node 102 communicates the network configuration information to the adjacent nodes 103 and 104, and the node 103 communicates the network configuration information to the adjacent node 105. Furthermore, the node 104 communicates the network configuration information to the adjacent nodes 105 and 106. Finally, the node 105 communicates the network configuration information to the adjacent node 106. By communicating the network configuration information as described above, the network configuration information changed at the node 101 is communicated to all the other nodes 102 to 106.

There may be provided a management node device in a network to manage each node device in the network. For example, in Japanese Patent Laid-Open No. 2002-77204, there is described a technique in which a cyclic frame is sent from a management node device and a managed node device having received the cyclic frame issues a request-to-send.

Other examples of management systems for notification of optimum route are disclosed in Patent Applications US5654958, EP0915594 and US5031093.

In a network, it is an important point how a connection target of a node device to be newly connected shouldbe selected. Here, description will be made on a network construction method to be implemented for a network in which communication is performed based on connection established with an adjacent node device.

In prior-art network construction methods, when a node X participates into a network, it attempts connection to any one or multiple nodes, as shown in Figure 29A. When multiple nodes to be connected are known, connection is made, in consideration of the network condition (round trip time, hereinafter referred to as RTT) from the node X to the nodes, the number of connections of the nodes, and throughputs and communication bands of the nodes, to a node with a low RTT value, a node with a small number of connections, a node with a high throughput, or a node with a broad communication band. Figure 29B shows the condition after the connection.

However, the method in which each node manages information about connection with its adjacent nodes as described above, has the following problems. That is, when a node communicates with a node other than its adjacent nodes, the node first requests information about a route to the target node from an adjacent node, and further requests the information from a node adjacent to the adjacent node if the adjacent node does not know the target node. When a route information request is sequentially communicated as described above, there is a problem that time is required until the information about the route to the target node is acquired.

That is, in notification of change in network information by exchanging information between adjacent nodes, if any change is made in network configuration information at a node, the changed network configuration information is communicated to all nodes through notification to adj acent nodes to that effect. Therefore, there is a problem that time is required until the network configuration information has been communicated to all the nodes.

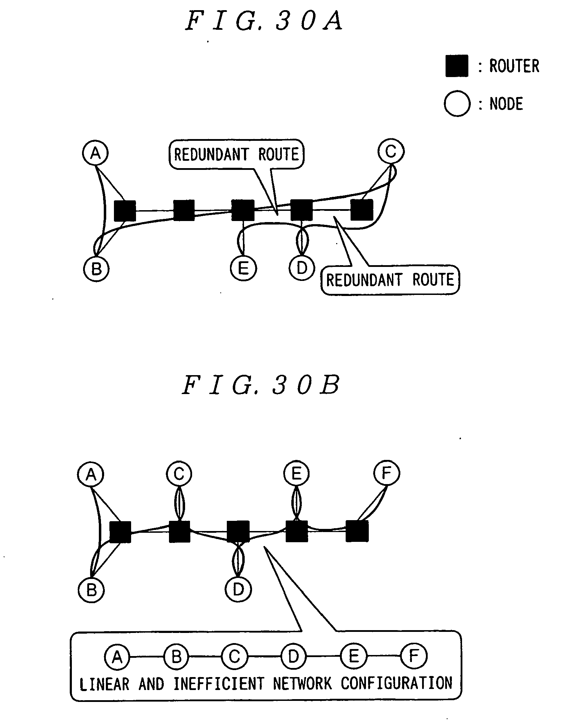

Furthermore, the method of connecting to any one or multiple nodes as shown in Figure 29A and Figure 29B has a problem that a redundant route is generated as shown in Figure 30A and a network with a high redundancy is constructed. Furthermore, there is also a problem, with regard to the configurationof the entire network, that an inefficient linear topology is constructed as shown in Figure 30B.

An object of the present invention is to install a special management node in a system in which each node performs communication based on a connection established with an adjacent node and provide a management node device capable of efficiently performing network configuration management throughmanagement of route information andmanagement of nodes participating in a network, a node device, a network configuration management system, a network configuration management method, a node device control method and a management node device control method.

Another object of the present invention is to provide a management node device capable of, in a network in which each node performs communication based on connection established with an adjacent node, efficiently constructing the network by notifying a node newly participating into the network of an appropriate node to connect to, a node device, a network configuration management system, a network configuration management method, a node device control method and a management node device control method.

### Disclosure of the Invention

A management node device for managing a network constituted by node devices is defined according to claim 1. Other embodiments are defined according to claims 2-11.

### Brief Description of the Drawings

Figure 1 is a block diagram showing an example of configuration of a network configuration management system according to an embodiment of the present invention;
Figure 2 is a block diagram showing the configuration of each node in a network to which the network configuration management system, an embodiment of the present invention, is applied;
Figure 3 is a block diagram showing the configuration of a management node in a network to which the network configuration management system, an embodiment of the present invention, is applied;
Figure 4 is a flowchart showing a network configuration management procedure to be performed in the case of participating into a network to which the network configuration management system, an embodiment of the present invention, is applied;
Figure 5A shows a network configuration diagram to be changed in accordance with the flowchart shown in Figure 4, and a network configuration information table held by the management node before being changed;
Figure 5B shows a network configuration diagram changed in accordance with the flowchart shown in Figure 4, and a network configuration information table held by the management node after being changed;
Figure 6 is a flowchart showing a network configuration management procedure to be performed when an adjacent node to be connected to by a node is changed in a network to which the network configuration management system, an embodiment of the present invention, is applied;
Figure 7A shows a network configuration diagram to be changed in accordance with the flowchart shown in Figure 6, and a network configuration information table held by the management node before being changed;
Figure 7B shows a network configuration diagram changed in accordance with the flowchart shown in Figure 6, and a network configuration information table held by the management node after being changed;
Figure 8 is a flowchart showing a network configuration management procedure to be performed when a node communicates with a node other than adjacent nodes in a network to which the network configuration management system, an embodiment of the present invention, is applied;
Figure 9 shows a network configuration diagram and a network configuration information table held by the management node which are to be changed in accordance with the flowchart shown in Figure 8;
Figure 10 is a flowchart showing a network configuration management procedure to be performed when a node communicates with a node other than adjacent nodes in a network to which the network configuration management system, an embodiment of the present invention, is applied;
Figure 11 shows a network configuration diagram and a network configuration information table held by the management node which are be changed in accordance with the flowchart shown in Figure 10;
Figure 12 shows a network configuration and a network configuration information table held by the management node after a node pulls out;
Figure 13 is a network configuration requiring notification of bypass route information and a network configuration information table held by the management node;
Figure 14A shows an example of a network;
Figure 14B shows an example of an algorithm for calculating the shortest route between nodes in the network in Figure 14A;
Figure 15 is a flowchart showing the algorithm in Figures 14A and 14B;
Figure 16 is examples of costs among nodes in a network;
Figure 17 is a flowchart showing the algorithm in Figure 16;
Figure 18 is a flowchart showing the operation of a management control section in Figures 21 and 22;
Figure 19 is a sequence diagram corresponding to the flow of the flowchart shown in Figure 18;
Figure 20 shows an ideal tree-type topology with the degree of 3;
Figure 21 is a flowchart showing a procedure for constructing the topology in Figure 20;
Figures 22A to 22D show a tree-type topology in consideration of the shortest route connection with the degree of 3;
Figure 23 is a flowchart showing a procedure for constructing the topology in Figures 22A to 22D;
Figure 24 shows an ideal loop-type topology with the number of new connections of 2;
Figure 25 is a flowchart showing a procedure for constructing the topology in Figure 24;
Figures 26A to 26D show a loop-type topology in consideration of the shortest-route connection with the number of new connections of 2;
Figure 27 is a flowchart showing a procedure for constructing the topology in Figures 26A to 26D;
Figure 28 shows communication condition of prior-art network configuration information in a network constituted by multiple nodes;
Figures 29A and 29B illustrate an example of a topology construction process; and
Figures 30(a) and 30(b) illustrate a problem in construction of a topology.

### Best Mode for Carrying Out the Invention

Embodiments of the present invention will be described with reference to drawings. In each of figures referenced in the description below, portions equivalent to those in the other figures are denoted by the same reference numerals.

In the present invention, there is provided in a network amanagementnodedevice for managing node devices constituting the network. Network configuration information is stored in the management node device. The network configuration information includes node-to-node connection information, information about links of each of the nodes constituting the network with adjacent nodes, and the information is used for calculating information about a route between node devices or an optimum connection target for a node device to be newly connected to the network.

### 1. Management of route information

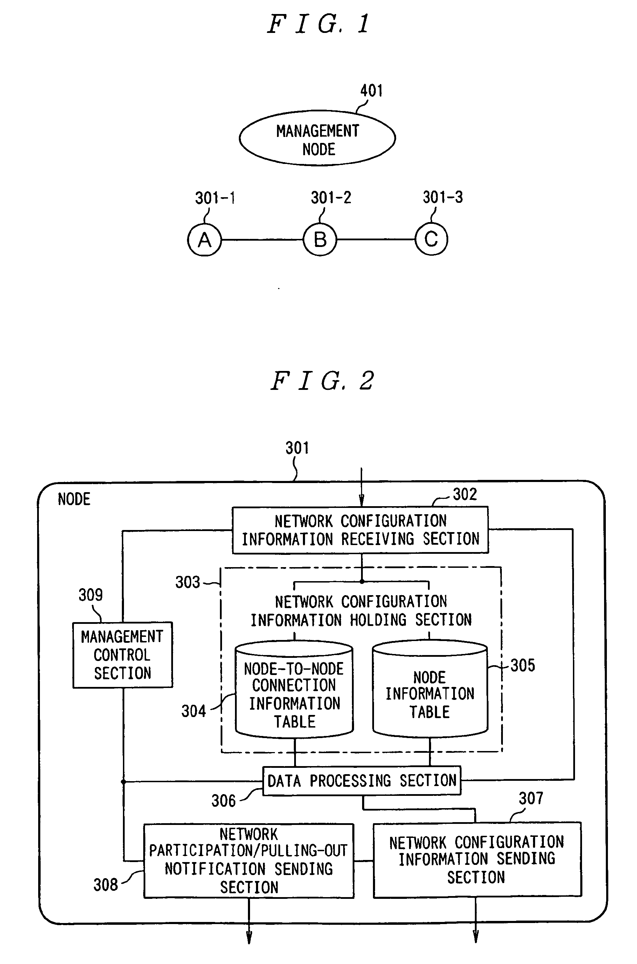

Figure 1 is a block diagram showing an embodiment of a network configuration management system according to the present invention. As shown in the figure, the network configuration management system according to the embodiment is configured to include three nodes 301-1, 301-2 and 301-3 and a management node 401 which functions as a network configuration management device for managing these nodes. In this example, identification information (hereinafter referred to as a node ID) about the node 301-1 is "A", identification information about the node 301-2 is "B", and identification information about the node 301-3 is "C". Though the number of nodes managed by the management node 401 is "three (3)", it is not limited thereto. The type of a network may be any of a star type, a bus type and a ring type.

Each node device and the management node device may be connected wiredly or wirelessly. Each node device and the management node device may be not only realized by utilizing a known personal computer or a server device but also realized by utilizing a portable terminal device including a PDA (personal digital assistant) and a cellular phone.

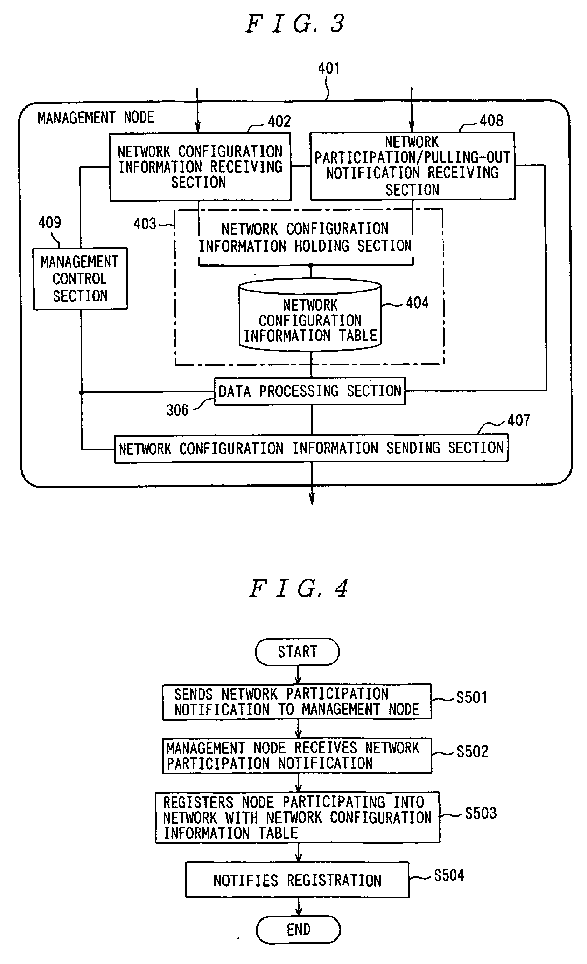

An example of configuration of each node constituting a network and an example of configuration of a management node are described below with reference to Figures 2 and 3.

### (Node device)

Figure 2 is a block diagram showing the configuration of each node in a network used by a network configuration management system, an embodiment of the present invention. In Figure 2, a node 301 is a node in a network having multiple nodes not shown. For example, the node 301 is the node 301-1 in Figure 1. All the other nodes in the network have the same configuration.

A network configuration information holding section 303 in the node 301 has a node-to-node connection information table 304 and a node information table 305. The node-to-node connection information table 304 holds information about links to adjacent nodes. The node information table 305 hold information about the node such as a node ID, which is identification information about the node, and the communication line speed of the node.

A network configuration information receiving section 302 in the node 301 receives network configuration information sent from other nodes and causes the received network configuration information to be held by the network configuration information holding section 303.

A data processing section 306 performs an edit processing of the network configuration information held by the network configuration information holding section 303. A network configuration information sending section 307 notifies the network configuration information held by the network configuration information holding section 303 and edited by the data processing section 306 to the management node. The notification of the network configuration information to the management node may be made, for example, in a predetermined cycle. The notification timing is not especially limited. The notification may be made in response to a request from the management node device, or may be positively made by a managed node.

When the node 301 participates into the network (when it newly connects to the network), a network participation/pulling-out notification sending section 308 notifies the management node to that effect.

A management control section 309 controls each portion in the node 301 to manage the network configuration information.

### (Management node device)

Figure 3 is a block diagram showing the configuration of a management node in a network used by the network configuration management system, an embodiment of the present invention. In Figure 3, a management node 401 can be communicated with by all multiple nodes not shown. For example, in the network shown in Figure 1, all the nodes 301-1 to 301-3 can communicate with the management node 401.

A network configuration information holding section 403 in the management node 401 has a network configuration information table 404. The network configuration information table 404 has IDs of all the nodes participating in the network and IDs of nodes connected at positions adjacent to the positions where the nodes are connected (adjacent nodes).

A network configuration information receiving section 402 in the management node 401 receives network configuration information sent from other nodes and causes the received network configuration information to be held by the network configuration information holding section 403.

A data processing section 406 performs an edit processing of the network configuration information held by the network configuration information holding section 403. The data processing section 406 has a function of, in response to receiving a network connection request from a node to be newly connected to the network (hereinafter referred to as a newly connecting node), selecting an optimum connection target for the node. The selection of the optimum connection target is made in accordance with an algorithm of a selection control program incorporated in advance. The algorithm will be described later together with specific examples.

A network configuration information sending section 407 sends the network configuration information held in the network configuration information table 404 and edited by the data processing section 406.

A network participation/pulling-out notification receiving section 408 receives a notification made when a node participates into or pulls out of the network.

A management control section 409 controls each portion in the management node 401 to manage the network configuration information.

Description will be now made on a management control procedure to be performed by the management control section 409 of the management node and the management control section 309 of each of the other nodes. Description will be made here on each of a processing performed at the time of participation into the network, a processing performed when the network condition is managed, a topology notification processing and a processing performed at the time of pulling out of the network.

### (Participation into the network)

First, description will be made on a management control procedure 1 to be performed when a node participates in the network with reference to a flowchart shown in Figure 4.

In the figure, a node which participates into a network first sends a network participation notification (step S501). Then, the management node receives the network participation notification (step S502).

The management node registers the node which participates into the network with a network configuration information table (step S503). The management node notifies the node of the registration (step S504). Thereby, the new node can participate in the network.

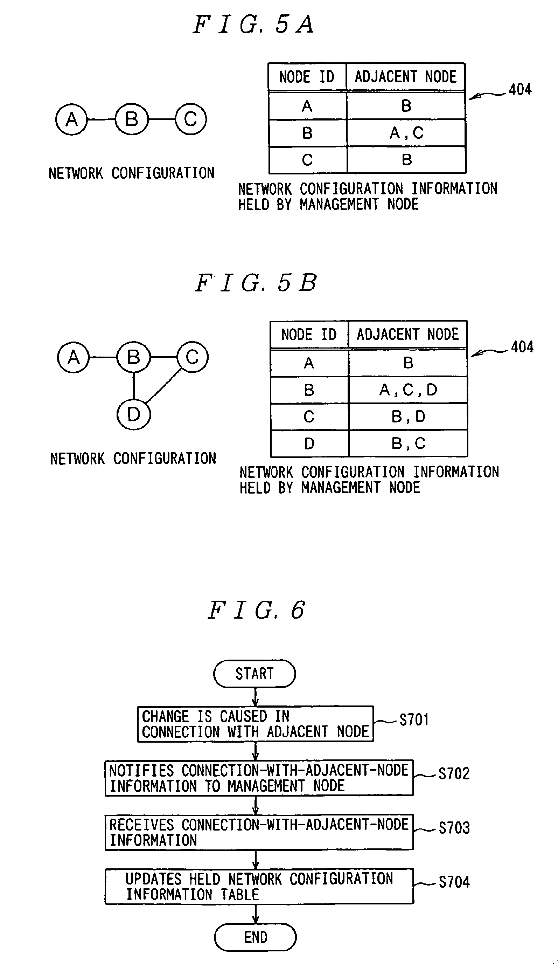

Figures 5A and 5B show contents of the network configuration information table held by the management node, which is to be changed in accordance with the flowchart shown in Figure 4. In Figure 5A, this network has three nodes linearly connected with one another.

In this condition, the network configuration information held by the management node is as follows. That is, the ID of a node adjacent to a node with a node ID "A" is "B". The IDs of nodes adjacent to the node with the node ID "B" are "A" and "C". The ID of a node adjacent to the node with a node ID "C" is "B".

In the condition of Figure 5A, if a node D newly participates in the network, then the network configuration information is, for example, as shown in Figure 5B. That is, the ID of a node adjacent to the node with the node ID "A" is "B". The IDs of nodes adjacent to the node with the node ID "B" are "A", "C" and "D". The IDs of nodes adjacent to the node with the node ID "C" are "B" and "D". The IDs of nodes adjacent to the node with the node ID "D" are "B" and "C".

As described above, in this system, a node which participates into the network has notification means for notifying identification information about the node to the management node device. According to this configuration, the management node can recognize the participation of the new node and automatically update the network configuration information.

### (Management of the network condition)

Next, description will be made on a management control procedure 2 to be performed when the management node manages the network condition with reference to a flowchart shown in Figure 6.

In the figure, if any change is caused in the condition of connection with an adjacent node, at any node in the network (step S701), the node notifies connection-with-adjacent-node information to the management node (step S702). Then, the management node receives the connection-with-adjacent-node information (step S703). The management node updates the contents of the network configuration information table it holds using the connection-with-adjacent-node information (step S704). Thereby, the management node can know the IDs of nodes adjacent to all the nodes in the network.

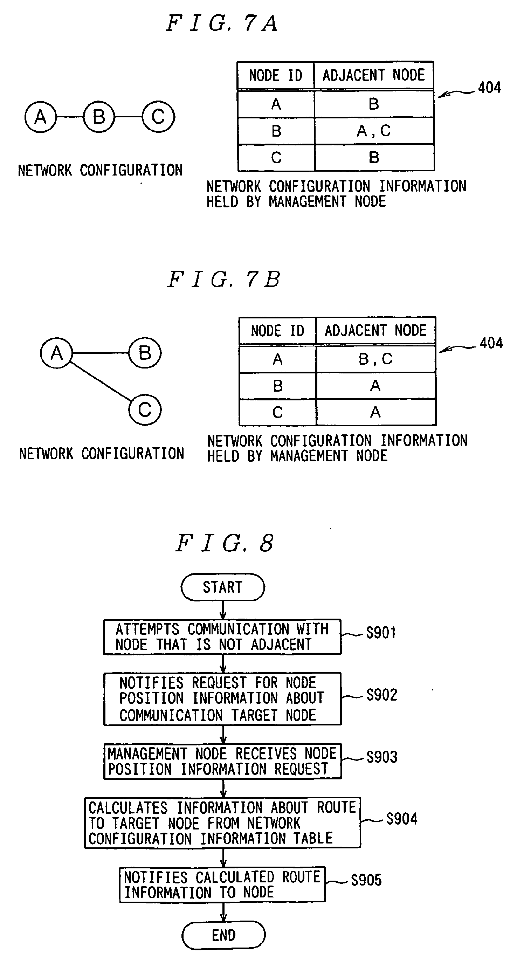

Figures 7A and 7B show contents of the network configuration information table held by the management node, which is to be changed in accordance with the flowchart shown in Figure 6. In Figure 7A, this network has three nodes linearly connected with one another. That is, the network configuration information held by the management node is as follows. The IDs of nodes adjacent to a node with a node ID "A" are "B" and "C". The ID of a node adjacent to the node ID "B" is "A". The ID of a node adjacent to the node with the node ID "C" is "A". That is, the ID of a node adjacent to the node with the node ID "A" is "B". The IDs of nodes adjacent to the node with the node ID "B" are "A" and "C". The ID of a node adjacent to the node with the node ID "C" is "B".

Under this condition, a case will be considered where the node C changes its connection target from the node B to the node A. The configuration of the network then becomes as shown in Figure 7B, and thereby, the network configuration information held by the management node becomes as shown in the figure. That is, the network configuration information held by the management node is as follows. The IDs of nodes adjacent to the node with the node ID "A" are "B" and "C". The ID of a node adjacent to the node with the node ID "B" is "A". The ID of a node adjacent to the node with the node ID "C" is "A".

In the description below, the node with the node ID "A" is shown simply as the "node A". The same applies to the other node IDs.

### (Notification of topology)

Next, description will be made on a management control procedure 3 to be performed when a node communicates with a node which is not adjacent to the node with reference to a flowchart shown in Figure 8.

In the figure, when a node in the network first attempts to communicate with a node which is not adjacent to the node (step S901), it notifies the management node of a node position information request to request a position of a node to communicate with (step S902). The management node receives the node position information request notification (step S903), and calculates information about a route to the target node based on the network configuration information table it holds (step S904). The management node then sends the route information to the node (step S905). Thereby, the node in the network can communicate with the node which is not adjacent to the node.

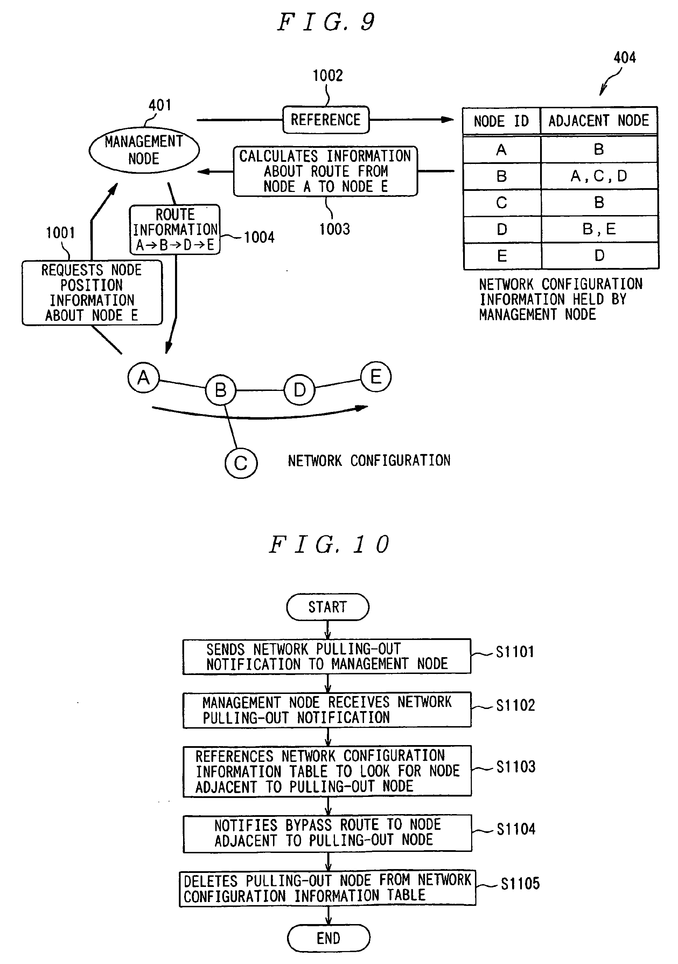

Figure 9 shows network information sent and received in accordance with the flowchart shown in Figure 8. In Figure 9, the network has five nodes A to E. The nodes A, B, D and E are linearly connected with one another, and the node C is connected only to the node B.

In this connection condition, when starting communication with the node E, the node A sends a request for node position information about the node E to the management node (step S1001). Receiving the node position information request, the management node references the network configuration information table (step S1002) to calculate information about a route from the node A to the node E (step S1003). In this example, route information of "A→B→D→E" is calculated.

The management node notifies the calculated route information to the node A (step S1004). Thereby, the node A can communicate with the node E.

### (Pulling out of a network)

Next, description will be made on a management control procedure 4 to be performed when a node in the network pulls out of the network with reference to a flowchart shown in Figure 10. In Figure 10, a node in the network first sends a network pulling-out notification to the management node (step S1101). When the management node receives the network pulling-out notification (step S1102), it references the network configuration information table to search for a node adjacent to the node pulling out of the network (step S1103). The management node then notifies a bypass route to the node adjacent to the node pulling out of the network (step S1104). At the same time, the management node deletes the node pulling out of the network from the network configuration information table (step S1105). Thereby, even when any node pulls out of the network, other nodes can keep the existing communication condition.

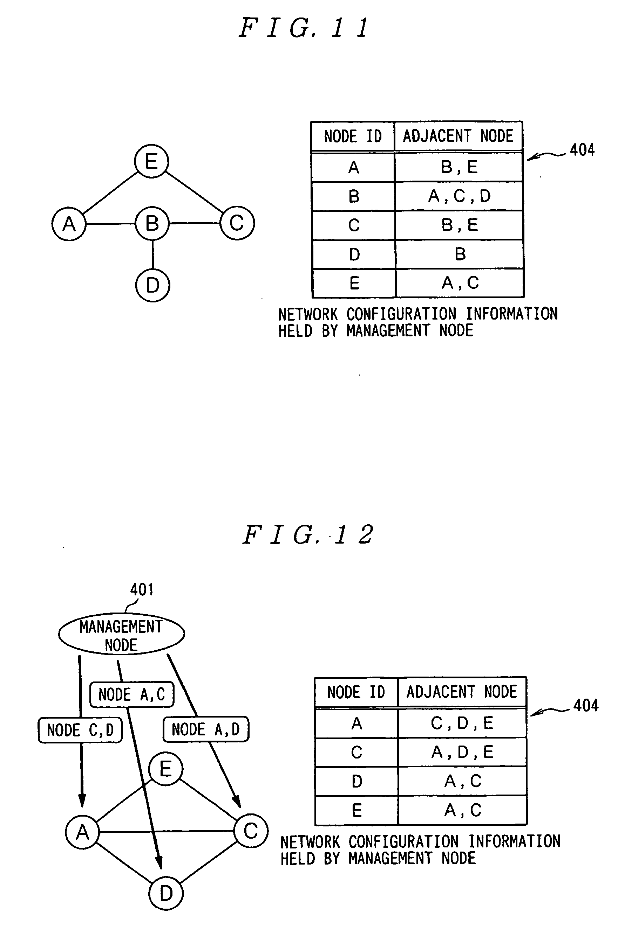

Figure 11 shows a network diagram and network configuration information held by the management node which are to be changed in accordance with the flowchart shown in Figure 10.

In Figure 11, the network has five nodes A to E. When the node B sends a network pulling-out notification to the management node, the management node receiving the notification notifies the nodes A, D and C adjacent to the node B of change of their respective connection targets. In this example, the node A is notified of the nodes D and C as the new connection targets; the node C is notified of the nodes AandD; andthenodeDisnotifiedofthenodesAandC. Thereby, the network changes into the network configuration shown in Figure 12.

### (Method for setting a bypass route)

The management node notifies information about a bypass route to a node which cannot perform direct communication. For example, in Figure 12, if the node A cannot directly communicate with the node C, the management node notifies the node A of a route "A→E→C" as a bypass route. If the node A cannot directly communicate with the node D, the management node notifies the node A of a route "A→E→C→D" as a bypass route. In this way, the information about a bypass route is notified, and therefore, even if adjacent nodes cannot directly communicate with each other, they can perform communication utilizing a bypass route.

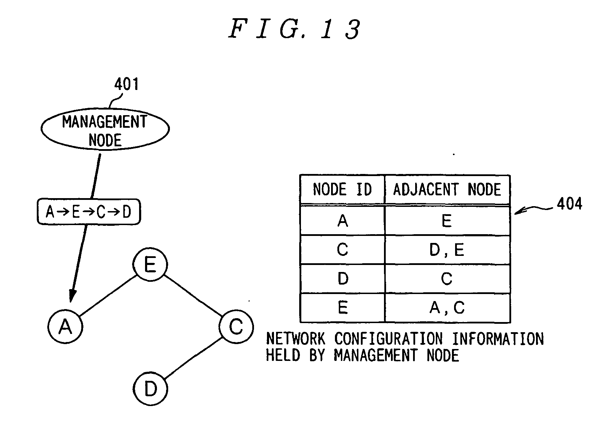

Figure 13 shows the network configuration basedon a bypass route notification in the case where adjacent nodes cannot directly communicate with each other.

In the figure, nodes adjacent to a node pulling out of the network notify their respective IDs to each other in order to attempt direct communication. If direct communication is impossible, a bypass route is notified. In this example, a node A cannot directly communicate with a node D even though the node IDs of the nodes adjacent to a node pulling out of the network are notified. Accordingly, a route "A→E→C→D" is notified by the management node to the node A as a bypass route. By receiving the bypass route information, the node A can perform communication utilizing the bypass route.

According to the above configuration, this system can effectively manages the network.

### (Method for setting the shortest route)

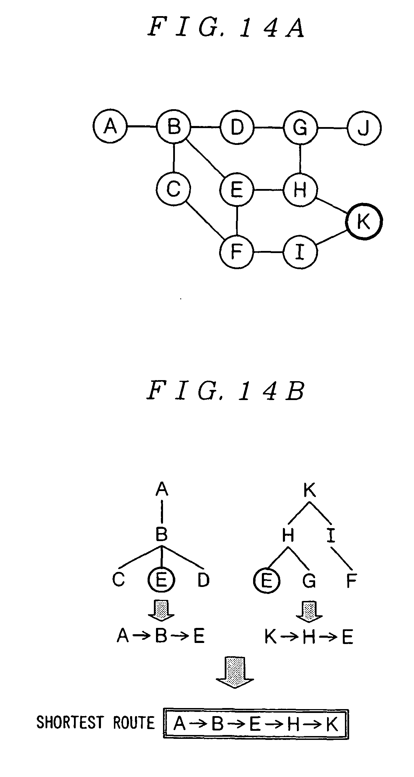

A method for calculating the shortest route will be now described with reference to Figures 14A and 14B, and 15 to 17.

Figure 14B shows an example of an algorithm for calculating the shortest route from a node A to a node K in a network constituted by 10 nodes A to J shown in Figure 14A.

As shown in Figure 14B, node trees are created by following the network with the node A which is a start node and the node K which is a target node as origins, respectively. When corresponding nodes (identical nodes) appear in the created node trees, the creation of the node trees is stopped. In this example, a node E is the corresponding node. The route constituting by the routes to the identical nodes is determined as the shortest route. In this example, "node A→node B→node E→node H→node K" is the shortest node.

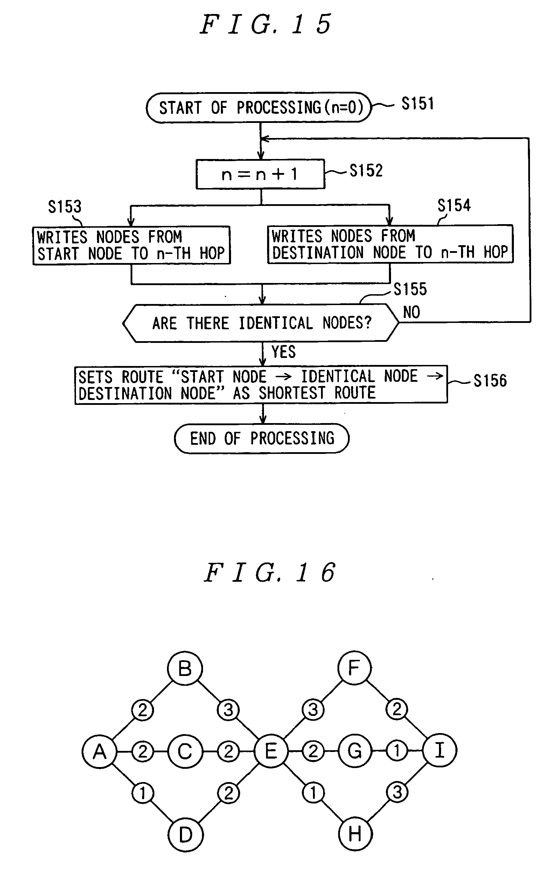

The above-described algorithm will be further described with reference to Figure 15. The figure is a flowchart showing the algorithm for calculating the shortest route. In the figure, the initial value is set as n = 0 when the processing is started (step S151), and n = n+1 is set at step S152.

Then, nodes from the start node to the n-th hop are written (step S153). At the same time, nodes from the target node to the n-th hop are written (step S154). Then, respective lists of the written nodes are examined for identical nodes (corresponding nodes) (step S155). If there are not identical nodes as a result of the examination, then the algorithm returns to step S152, where n = n+1 is set and the above processing (step S155→S152) is repeated.

On the contrary, if there are identical nodes as a result of the examination, then a route "start node→identical node→destination node" is determined as the shorted route (step S156).

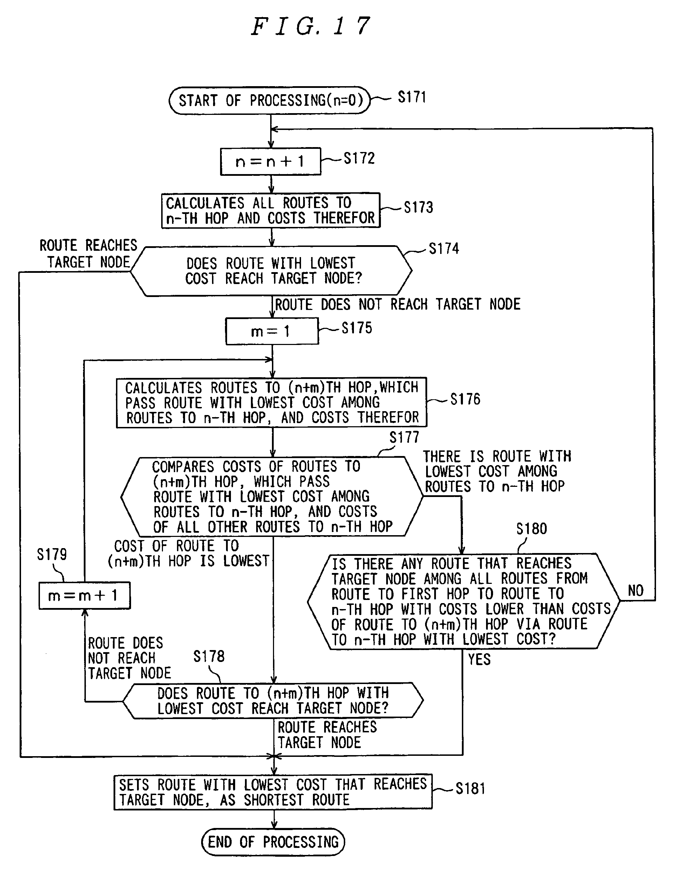

In Figures 14A and 14B, and 15, description has been made on a network in which a route is not weighted. A network in which a route is weighted is as shown in Figures 16 and 17. The network shown in Figure 16 is a network constituted by nine (9) nodes A to I. The circled numbers shown in the figure denote communication cost between two nodes.

Description will be made on an algorithm for calculating a route with the lowest cost from the node A to the node I in a network with such communication costs, with reference to Figure 17. The figure is a flowchart showing an algorithm for calculating the shortest route in a network in which a route is weighted. In the figure, the initial value is set as n = 0 when the processing is started (step S171), and n = n+1 is set at step S172.

Then, all the routes from a start node to the n-th hop and costs therefor are calculated (step S173). It is then examined whether a route with the lowest cost among all the routes from the start node to the n-th hop reaches a target node (step S174).

If the route with the lowest cost reaches the target node, the route with the lowest cost which reaches the target nodes is determined as the shortest route (step S174→S181).

If the route with the lowest cost does not reach the target node at step S174, the initial value is set as m = 1 (step S175), and routes to the (n+m) th hop via the route to the n-th hop with the lowest cost, and costs thereof are calculated (step S176).

Comparison is made between the costs of the routes to the (n+m) th hop via the route to the n-th hop with the lowest cost, and the costs of all the routes to the n-th hop other than the route to the n-th hop with the lowest cost (step S177).

If the cost of a route to the n-th hop is the lowest as a result of the comparison, then it is examined whether the route to the (n+m) th hop with the lowest cost reaches the target node (step S177→S178). If it does not reach the target node as a result of the examination, then m = m+1 is set (step S178→S179) The algorithm returns to the processing at step S176, and repeats the above processing.

If there is a route the cost of which is the lowest, among the routes to the n-th hop at step S177, then it is examined whether there is any node that reaches the target node among all of the routes from the route to the first hop to the route to the n-th hop, the cost of which is lower than the cost of the route to the (n+m)th hop via the route to the n-th hop with the lowest cost (step S177→S180). If there is not a node that reaches the target node, the algorithm return to step S172, sets n = n+1 and repeats the above processing. On the contrary, if there is a node that reaches the target node, the route which reaches the target node and the cost of which is the lowest is determined as the shortest route (step S180→S181) .

If the route to the (n+m) th hop reaches the target node at step S178, then the route with the lowest cost that reaches the target node is determined as the shortest route (step S178→S181) .

Byperforming the processing as described above, the route "node A→node D→node E→node G→node I" the cost of which is the lowest can be calculated.

### (Network configuration management method)

In the network configuration management system described above, a network configuration management method as described below is realized. That is, there is realized a network configuration management method for storing, holding and managing network configuration information indicating connection condition among nodes participating in a network, the network configuration management method comprising: a receiving step of receiving a request to search for a route from a first node in the network to a second node (corresponding to step S903 in Figure 8); a calculation step of, in response to the request to search for a route, calculating route information indicating a route between the first node and the second node based on the network configuration information (corresponding to step S904 in Figure 8); and a notification step of notifying the route information calculated at the calculation step to a request source (corresponding to step S905 in Figure 8). This makes it possible for nodes participating in the network to communicate with each other utilizing the route information.

As have been described with reference to Figures 14A and 14B, and 15, at the calculation step, node trees are created by following the network with the first node and the second node as origins, respectively, and the routes to the identical nodes which appear in the created node trees are determined as the route information. This makes it possible to easily calculate the shortest route.

As have been described with reference to Figures 14A and 14B, and 15, at the calculation step, costs between nodes included in the network are calculated respectively, and a route for which the calculated cost is the lowest is determined as the route information. This makes it possible to easily calculate a route with the lowest cost.

Furthermore, at the calculation step, if the first node and the second node are not able to directly communicate with each other, route information showing a bypass route via a node other than the nodes is calculated (corresponding to step S1003 in Figure 10). Thereby, even when nodes participating in the network cannot directly communicate with each other, they can communicate with each other utilizing the bypass route.

The network configuration information includes identification information about nodes participating in the network and identification information about adjacent nodes which are adj acent to the nodes. Thereby, the management node can recognize the configuration of the network which it manages.

It is desirable to further include a step of, in response to a notification of participation into the network by any node, adding and holding identification information about the node as the network configuration information (corresponding to step S503 in Figure 4). This makes it possible to automatically update the network configuration information to be updated when a new node participates.

It is desirable to further include a notification step, by the node which participates into the network, of notifying its identification information to the management node (corresponding to step S501 in Figure 4). This makes it possible for the management node to recognize the participation of the new node and automatically update the network configuration information.

It is desirable to further include a step of, in response to a pulling-out notification from a node participating in the network, updating contents of the network configuration information based on identification information about the pulling-out node (corresponding to step S704 in Figure 6), and notify the held contents which have been updated to a node adjacent to the pulling-out node. This makes it possible to automatically update the network configuration information to be updated when a node pulls out.

By adopting the network configuration management method as described above, it is possible to efficiently manage the network.

### 2. Selection a node to connect to

Description will be made below on a management control procedure and the like by this system comprising the management control section 309 for the node device described above (see Figure 2) and the management control section 409 for the management node device described above (see Figure 3).

### (Management control procedure)

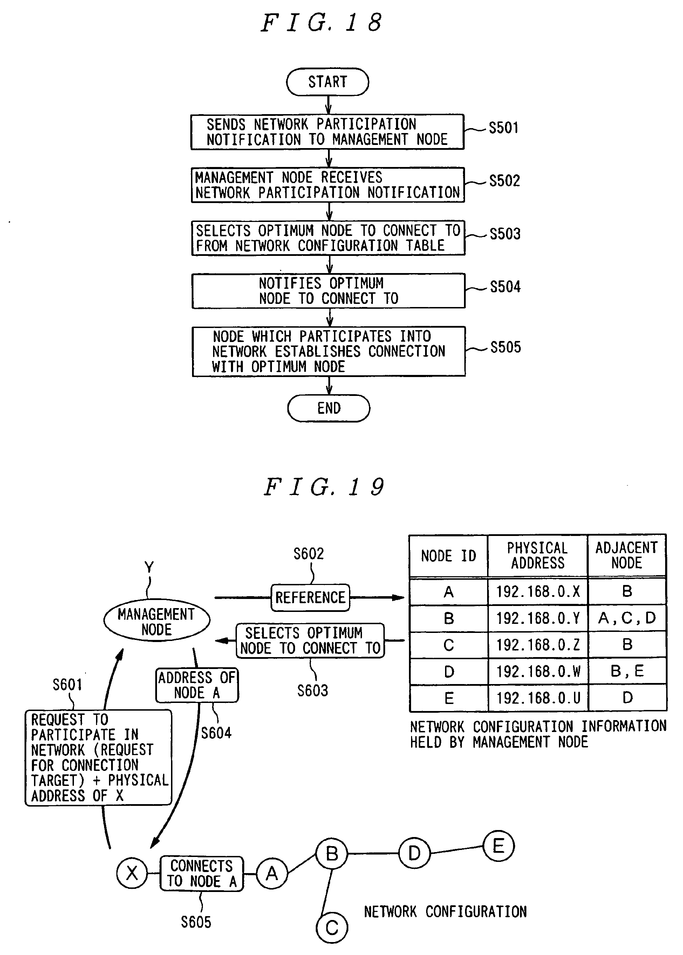

First, description will be made on notification of an optimum node to connect to, which is performed when a new node participate into the network, with reference to a flowchart shown in Figure 18. In Figure 18, a node which participates into the network first sends a network participation notification (step S501), and the management node receives the network participation notification (step S502). The management node references the network configuration information table to select an optimum node to connect to (step S503). The management node then notifies the node of the information about the selected optimumnode to connect to (step S504). Thereby, the node which newly participates into the network establishes connection with the optimum node (step S505).

Figure 19 is a sequence diagram corresponding to the flow of the flowchart shown in Figure 18. In Figure 19, a node X is a node which newly participates into the network. Nodes A, B, C, D and E have already participated in the network, and a management node Y manages information about the five nodes A to E.

In this example, the physical address of the node A is "192.168.0.X", that of the node B is "192.168.0.Y", that of the node Cis "192.168.0.Z", that of the node D is "192.168.0.W", and that of the node E is "192 .168.0.U".

In this example, a node adjacent to the node A is "node B", nodes adjacent to the node B are "node A, node C and node D", a node adjacent to the node C is "node B", nodes adjacent to the node D are "node B and node E", and a node adjacent to the node E is "node D".

In this network configuration, the node X which newly attempts connection first notifies a network participation request (a request for a connection target) to the management node Y (step S601). Receiving the notification, the management node Y references a table of node IDs information it holds (step S602) and selects an optimum node to connect to (step S603). Furthermore, the management node Y notifies information about the optimum node (the address of the node A in this example) to the node X (step S604), and the node X connects to the optimum node to connect to (the node A in this example) in accordance with the contents of the information notified by the management node Y (step S605).

### (Examples of algorithms)

Selection of an optimum node to connect to depends on an adopted network operation policy. Examples of algorithms for selecting an optimum node will be described below. Here, examples where attention is focused on the topology configuration (a tree structure or a loop structure) and the degree (the number of connections) as a network operation policy.

### <Algorithm 1>

Description will be now made on an algorithm for constructing a complete tree-type topology in which the number of hops between any two nodes, for all the nodes, is the minimum.

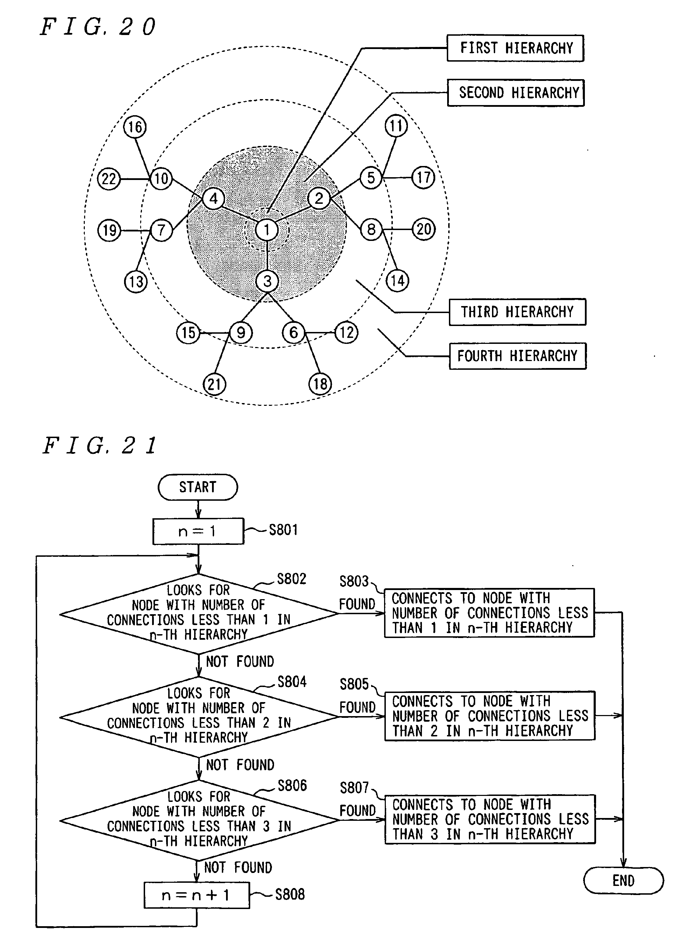

Consideration will be made on a case of constructing a complete tree structure network in which no loop route is created. Figure 20 shows an ideal tree-type topology with the degree of 3 (the number of connections of 3). Numbers attached to nodes indicate the order of connections. The procedure for constructing this topology will be described with reference to a flowchart in Figure 21.

First, n = 1 is set (step S801). When a newly connecting node appears, a node with the number of connections less than 1 is looked for in the n-th hierarchy from the center node (step S802). If there is a node with the number of connections less than 1, then the newly connecting node is connected to the node, that is, the node with the number of connections less than 1 in the n-th hierarchy (step S802→S803).

If there is not a node with the number of connections less than 1, then a node with the number of connections less than 2 is looked for in the n-th hierarchy from the center node (step S802→S804). If there is a node with the number of connections less than 2, then the newly connecting node is connected to the node, that is, the node with the number of connections less than 2 in the n-th hierarchy (step S804→S805).

If there is not a node with the number of connections less than 2, then a node with the number of connections less than 3 is looked for in the n-th hierarchy from the center node (step S804→S806). If there is a node with the number of connections less than 3, then the newly connecting node is connected to the node, that is, the node with the number of connections less than 3 in the n-th hierarchy (step S806→S807).

If there is not a node with the number of connections less than 3, then n = n+1 is set (step S806→S808→S802...) and the above processing is repeated.

As described above, in this algorithm, when a newly connecting node appears, the node is first connected to a node located in the first hierarchy from the center node, that is, the center node, if the number of connections of the center node is less than 3. If the number of connections of the center node is 3 or more, then the same procedure is performed for the nodes located in the second hierarchy, the next hierarchy. If, for all the nodes in the n-th hierarchy, the number of connections is 3 or more, then the same procedure is performed for the (n+1)th hierarchy, and thus an optimum connection target is looked for in the same procedure. According to the above procedure, an optimized topology as shown in Figure 20 is constructed.

### <Algorithm 2>

Description will be made on an algorithm for constructing, in consideration of physical distances, a topology in which the number of hops between any two nodes is the minimum and no loop is created.

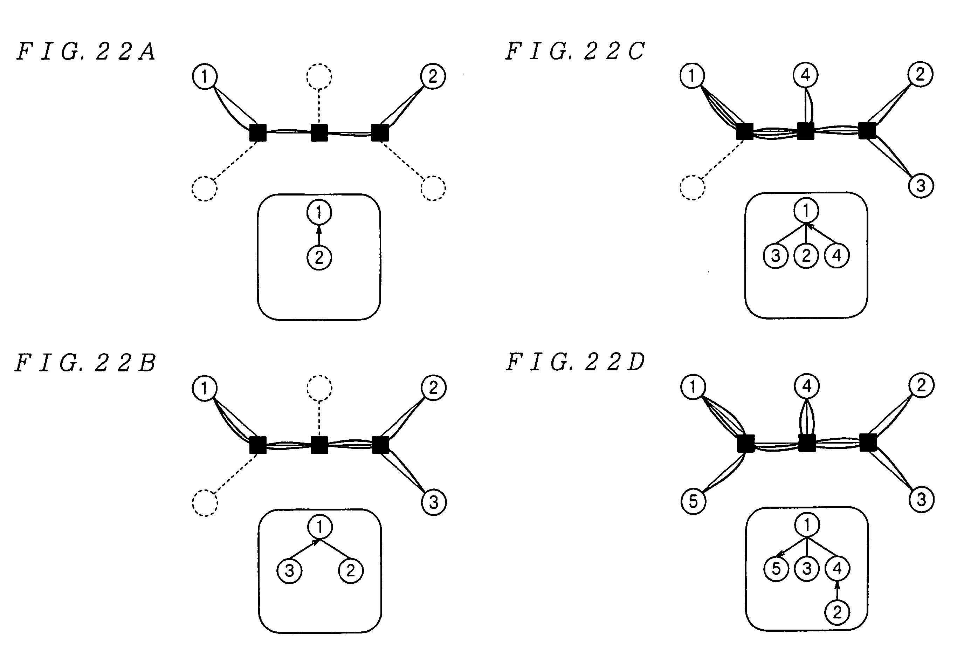

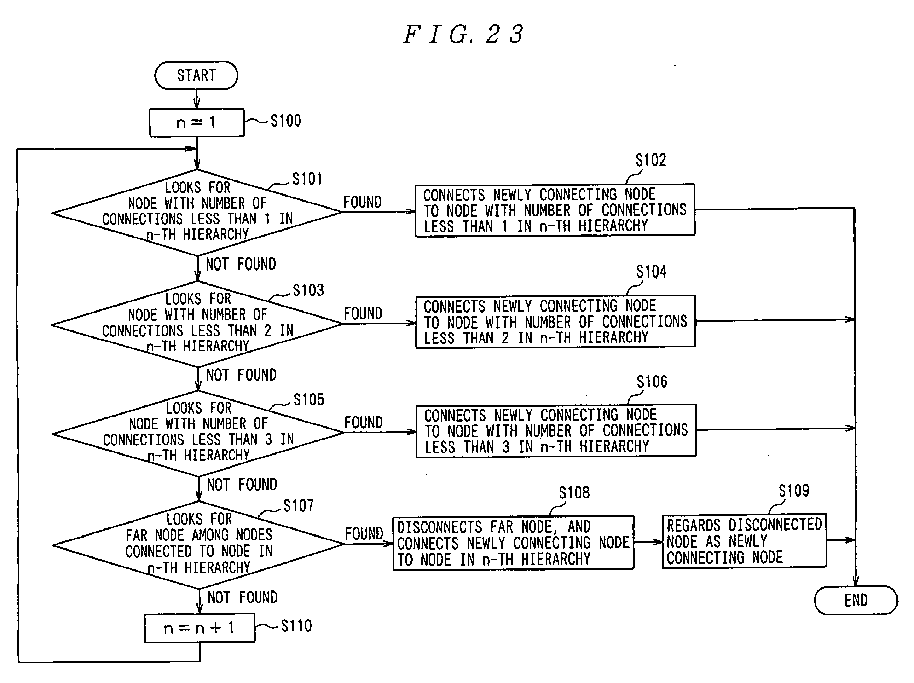

Consideration will be made on a case of constructing a topology for a complete tree structure network in which no loop route is created, taking into account connection via the shortest route. Figures 22A to 22D show a tree-type topology in consideration of the shortest route connection with the degree of 3 (the number of connections of 3). Numbers attached to nodes indicate the order of connections. The procedure for constructing the topologywill be described with reference to a flowchart in Figure 23.

First, n = 1 is set (step S100). When a newly connecting node appears, a node with the number of connections less than 1 is looked for in the n-th hierarchy from the center node (step S101). If there is a node with the number of connections less than 1, then the newly connecting node is connected to the node (step S101→S102).

If there is not a node with the number of connections less than 1, then a node with the number of connections less than 2 is looked for in the n-th hierarchy from the center node (step S101→S103). If there is a node with the number of connections less than 2, then the newly connecting node is connected to the node (step S103→S104).

If there is not a node with the number of connections less than 2, then a node with the number of connections less than 3 is looked for in the n-th hierarchy from the center node (step S103→105). If there is a node with the number of connections less than 3, then the newly connecting node is connected to the node (step S105→S106).

If there is not a node with the number of connections less than 3, then a node is looked for, which is connected to a node in the n-th hierarchy and the physical distance of which to the node in the n-th hierarchy is farther than that of the newly connecting node (step S105→S107). If there is such a node, the node is disconnected from the node in the n-th hierarchy, and the newly connecting node is connected instead (step S107→S108). The disconnected node is then regarded as a newly connecting node (step S109).

If there is not a node the physical distance of which to the node in the n-th hierarchy is farther than that of the newly connecting node, then n = n+1 is set (step S107→S110→S101...) and the above process is repeated.

As described above, in this algorithm, when a newly connecting node appears, the node is connected to a node with the number of connections less than 3 in the n-th hierarchy from the center node, if any. If, for all the nodes in the n-th hierarchy, the number of connections is 3 or more, and there is a node which is connected to a node in the n-th hierarchy and the physical distance of which to the node in the n-th hierarchy is farther than that of the newly connecting node, then the node is disconnected from the node in the n-th hierarchy, and the newly connecting node is connected instead. The disconnected node is regarded as a newly connecting node, and the same procedure is repeated.

According to the above procedure, a node is added as shown in Figures 22A, 22B, 22C and 22D, and an optimized topology is constructed.

### <Algorithm 3>

Description will be made on an algorithm for constructing a topology which certainly creates a loop in which the number of hops between any two nodes, for all the nodes, is the minimum.

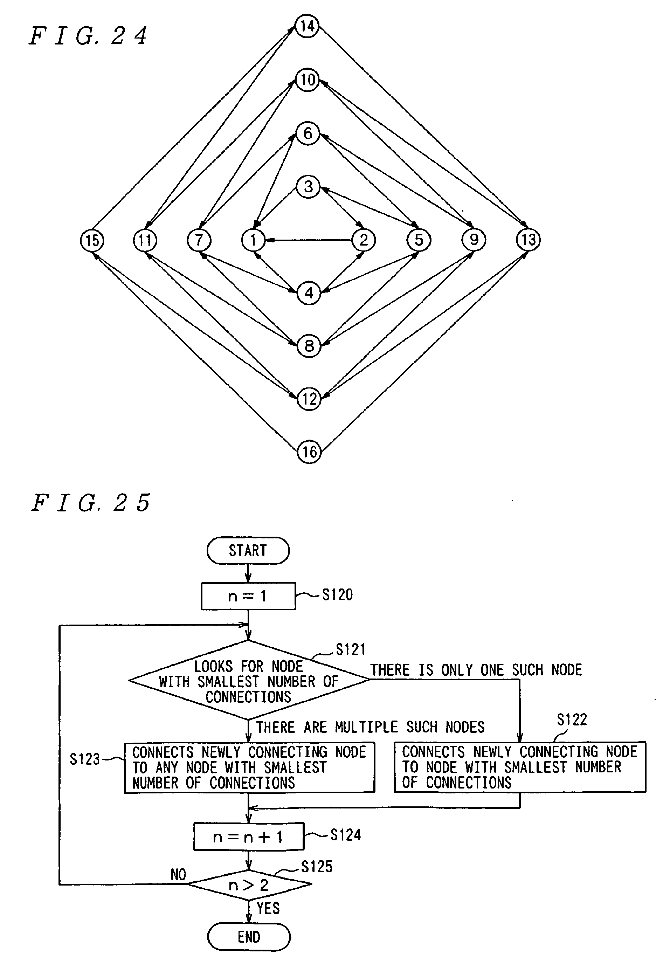

Consideration will be made on a case of constructing a complete loop structure network inwhich a loop route is created. Figure 24 shows an ideal loop-type topology with the number of new connections of 2. Numbers attached to nodes indicate the order of connections. The procedure for constructing this topology will be described with reference to a flowchart in Figure 25.

First, n = 1 is set (step S120). When a newly connecting node appears, a node with the smallest number of connections in the network is looked for (step S121). If there is only one such node, then connection is made to the node (step S121→S122). If there are multiple such nodes, then any node is selected from among them and connected (step S121→S123). Then, n = n+1 is set (step S124), and the same procedure is repeated until n>2 is realized (step S125) . That is, the same procedures is repeated again. Thereby, the newly connecting node establishes connections with two nodes.

As described above, in this algorithm, when a newly connecting node appears, a node with the smallest number of connections in the network is looked for. If there is only one such node, connection is made to the node. If there are multiple such nodes, any node is selected from among them and connection is made to the node. Furthermore, by repeating the same procedure again, the newly connecting node establishes connections with two nodes.

According to the above procedure, an optimized topology as shown in Figure 24 is constructed.

### <Algorithm 4>

Description will be made on an algorithm for constructing a topology which certainly creates a loop in which the number of hops between any two nodes is the minimum in consideration of physical distances.

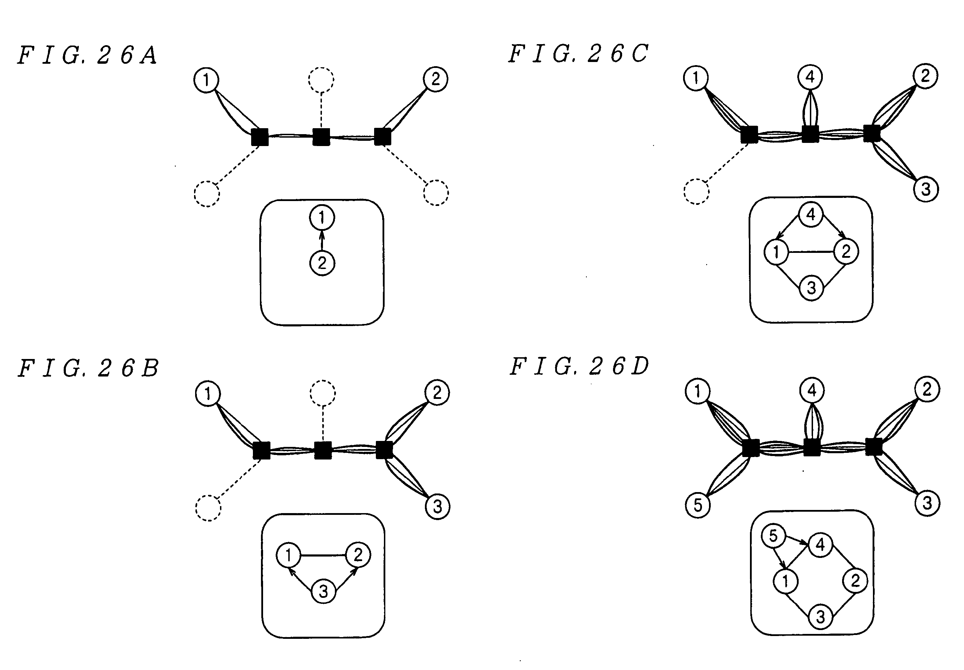

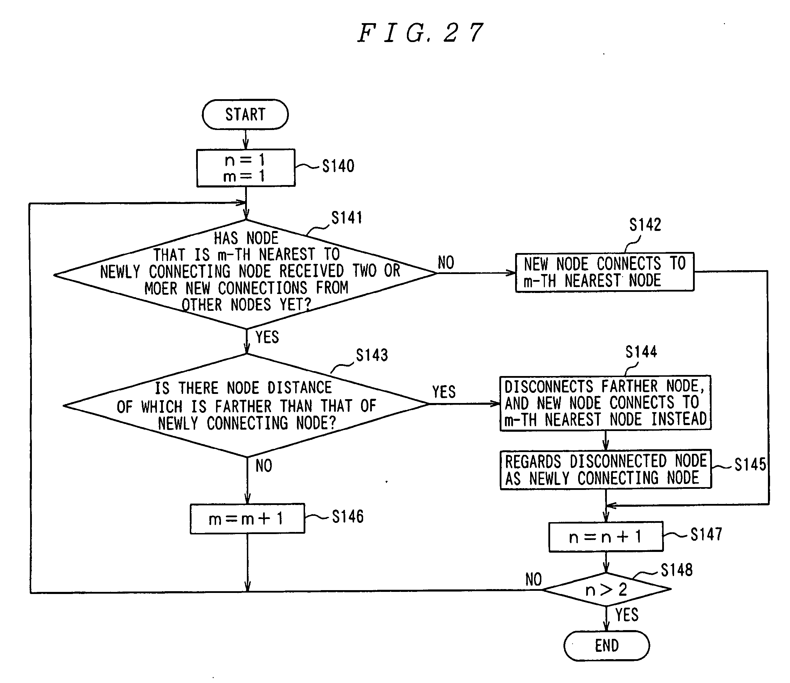

Consideration will be made on a case of constructing a topology for a complete loop structure network in which a loop route is created, taking into account connection via the shortest route. Figures 26A to 26D show a loop-type topology in consideration of connection via the shortest route with the number of new connections of 2. Number attached to nodes indicate the order of connections. The procedure for constructing this topology will be described with reference to a flowchart in Figure 27.

First, n = 1 and m = 1 are set (step S140). When a newly connecting node appears, a node which is the m-th nearest to the newly connecting node in the network is looked for first, and then it is examined whether the node has already been newly connected to by two or more other nodes (step S141).

If the node has not been newly connected to by two or more other nodes, then the newly connecting node is connected to the node (the m-th nearest node) (step S191→S142). On the contrary, if the node has already been newly connected to by two or more other nodes, then it is examined whether there is a node the distance of which to the node m-th nearest to the newly connecting node is farther than that of the newly connecting node, from among nodes connected to the node m-th nearest to the newly connecting node (step S141→S143). If such a node is found, then the farther node is disconnected and the newly connecting node is connected (step S143→S144). The disconnected node is then regarded as a newly connecting node (step S145).

When the newly connecting node is connected, n = n+1 is set (step S147), and the same procedure is repeated (step S148) until n>2 is realized (step S148→S141...). That is, the same procedure is repeated again. Thereby, the newly connecting node establishes connections with two nodes.

If, at step S143, such a node is not found, then m = m+1 is set (step S143→S146), and the same procedure is repeated for a node which is (m+1)th nearest to the newly connecting node.

As described above, in this algorithm, when a newly connecting node appears, a node which is the m-th nearest to the newly connecting node in the network is looked for. It is examined whether the node which is the m-th nearest to the newly connecting node has already been newly connected to by two or more other nodes. If the node has not been newly connected to by two or more other nodes, connection is made to the node. If the node has received two or more new connections, a node the distance of which to the node m-th nearest to the newly connecting node is farther than the newly connecting node, among nodes connected to the node m-th nearest to the newly connecting node is looked for. If such a node is found, the farther node is disconnected, and the newly connecting node is connected instead. If such a node is not found, the same procedure is repeated for a node which is the (m+1)th nearest to the newly connecting node.

As described above, the processing is repeated until the newly connecting node can make two new connections. Thereby, a node is added as shown in A, B, C and D of Figure 26, and an optimum topology is constructed.

As described above, the node device in this system is a node device constituting a network together with other node devices, and comprises notification means for notifying node-to-node connection information, information about links with adjacent node devices, to a management node device for managing the network as necessary. Thereby, the management node can always know the node-to-node connection information and select the most appropriate node to connect to in accordance with a particular operation policy. Furthermore, the node device in this system is a node device which newly connects to the network managed by the management node device, and comprises connection means for connecting to a connection target selected and specified by the management node device. The node device is connected to the network by connecting to the connection target. Thus, the node newly participating into the network knows the most appropriate node to connect to in accordance with a particular operation policy.

### (Method for controlling a node device)

For the node device in the above-described network configuration management system, a control method as shown below is realized. That is, there is realized a method for controlling node devices constituting a network together with other node devices, the method comprising a notification step of notifying node-to-node connection information, information about links with adjacent node devices, to a management node device for managing the network as necessary. This makes it possible for the management node to always know the node-to-node connection information and select the most appropriate node to connect to in accordance with a particular operation policy.

### (Method for controlling a management node device)

For the management node device in the above-described network configuration management system, a control method as shown below is realized. That is, there is realized a method for controlling a management node device for managing a network constituted by node devices, the method comprising a selection step of selecting, in response to receiving a request to connect to the network from a different node device, an optimum connection target for the node device and a notification step of notifying the selected connection target to the different node device. This makes it possible for the management node to select the most appropriate node to connect to in accordance with a particular operation policy.

At the selection step, when forming a tree-type topology network which is configured by connecting nodes hierarchically and sequentially from a center node with the maximum number of connections for one node as m, it is determined whether there is any node with the number of connections of or less than m in the n-th hierarchy from the center node. If there is a node with the number of connections of or less than m, a direction to connect to the node is given; and if there is not a node with the number of connections of or less than m, the same determination is performed for the (n+1) th hierarchy. This makes it possible to construct a complete tree-type topology in which the number of hops between any two nodes, for all the nodes, is the minimum.

Furthermore, at the selection step, when forming a tree-type topology network which is configured by connecting nodes hierarchically and sequentially from a center node with the maximum number of connections for one node as m, it is determined whether there is any node with the number of connections of or less than m in the n-th hierarchy from the center node. If there is a node with the number of connections of or less than m, a direction to connect to the node is given. If there is not a node with the number of connections of or lessthanm, it is determined whether there is any node connected to a node in the n-th hierarchy from the center node and located farther from the node in the n-th hierarchy than a newly connecting node. If there is such a node, a direction is given to disconnect the farther node and connect the newly connecting node instead. If there is not such a node, the same determination is performed for the (n+1) th hierarchy. This makes it possible to construct, in consideration of physical distances, a topology in which the number of hops between any two nodes is the minimum and no loop is created.

Furthermore, at the selection step, a node with the smallest number of connections is found. If there is a single such node, the node is specified as a connection target of a newly connecting node. If there are multiple such nodes, any node among the nodes is specified as a connection target of the newly connecting node. This makes it possible to construct a topology which certainly creates a loop in which the number of hops between any two nodes, for all the nodes, is the minimum.

At the selection step, it is determined whether a node which is the n-th nearest to a newly connecting node has already received two or more connections from other nodes. If the node has not been newly connected to by two ore more nodes, the node is specified as a connection target. If the node has received two or more connections, a node is looked for, which is located farther from the node which is the n-th nearest to the newly connecting node than the newly connecting node, among nodes connected to the node which is the n-th nearest to the newly connecting node. If the farther node is found, a direction is given to disconnect the farther node and connect the newly connecting node instead. If the farther node is not found, the same procedure is repeated for a node which is the (n+1)th nearest to the newly connecting node. This makes it possible to construct a topology which certainly creates a loop in which the number of hops between any two nodes is the minimum in consideration of physical distances.

### (Selection control program)

In the above-described network configuration management system, if the above algorithm 1 is adopted, a selection control program as shown below is used in the management node device. That is, in the management node device for managing a network constituted by node devices, there is used a selection control program for, in response to receiving a request to connect to the network from a different node device, selecting an optimum connection target for the node device, the selection control program comprising: a determination step of, when forming a tree-type topology network which is configured by connecting nodes hierarchically and sequentially from a center node with the maximum number of connections for one node as m, determining whether there is any node with the number of connections of or less than m in the n-th hierarchy from the center node, and a step of, if there is a node with the number of connections of or less than m, giving a direction to connect to the node; wherein the same determination is performed for the (n+1)th hierarchy if there is not a node with the number of connections of or less than m. This makes it possible to construct a complete tree-type topology in which the number of hops between any two nodes, for all the nodes, is the minimum.

In the above-described network configuration management system, if the above algorithm 2 is adopted, a selection control program as shown below is used in the management node device. That is, in the management node device for managing a network constituted by node devices, there is used a selection control program for, in response to receiving a request to connect to the network from a different node device, selecting an optimum connection target for the node device, the selection control program comprising: a determination step of, when forming a tree-type topology network which is configured by connecting nodes hierarchically and sequentially from a center node with the maximum number of connections for one node as m, determining whether there is any node with the number of connections of or less than m in the n-th hierarchy from the center node; a step of, if there is a node with the number of connections of or less than m, specifying the node as a connection target; a step of determining whether there is any node connected to a node in the n-th hierarchy from the center node and located farther from the node in the n-th hierarchy than a newly connecting node, if there is not a node with the number of connections of and less than m; a step of giving a direction, if there is such a node, to disconnect the farther node and connect the newly connecting node instead; and a step of performing the same determination for the (n+1)th hierarchy if there is not such a node. This makes it possible to construct, in consideration of physical distances, a topology in which the number of hops between any two nodes is the minimum and no loop is created.

Furthermore, in the above-mentioned network configuration management system, if the above algorithm 3 is adopted, a selection control program as shown below is used in the management node device. That is, in the management node device for managing a network constituted by node devices, there is used a selection control program for, in response to receiving a request to connect to the network from a different node device, selecting an optimum connection target for the node device, the selection control program comprising the steps of: finding a node with the smallest number of connections; specifying, if there is a single such node, the node as a connection target of a newly connecting node; and specifying, if there are multiple such nodes, any node among the nodes as a connection target of the newly connecting node. This makes it possible to construct a topology which certainly creates a loop in which the number of hops between any two nodes, for all the nodes, is the minimum.

In the above-mentioned network configuration management system, if the above algorithm 4 is adopted, a selection control program as shown below is used in the management node device. That is, in the management node device for managing a network constituted by node devices, there is used a selection control program for, in response to receiving a request to connect to the network from a different node device, selecting an optimum connection target for the node device, the selection control program comprising: a determination step of determining whether a node which is the n-th nearest to a newly connecting node has already received two or more connections from other nodes; a step of specifying, if the node has not received two or more connections, the node as a connection target; a step of looking for, if the node has received two or more connections, a node located farther from the node which is the n-th nearest to the newly connecting node than the newly connecting node, among the nodes connected to the node which is the n-th nearest to the newly connecting node; and, a step of, if such a node is found at the above step, giving a direction to disconnect the farther node and connect the newly connecting node instead; wherein, if such a node is not found, the same procedure is repeated for a node which is the (n+1)th nearest to the newly connecting node. This makes it possible to construct a topology which certainly creates a loop in which the number of hops between any two nodes, for all the nodes, is the minimum in consideration of physical distances.

As a recording medium for recording the above program, various recording media can be used including a semiconductor memory, a magnetic disk and an optical disk.

For this system, any of the methods (1), (2) or (3) shown below is adopted.
(1) In a network system which is constituted by multiple nodes each of which performs communication based on connection established with an adjacent node, and to which a network configuration method is applied in which a management node to be directly communicated with by each node in the network exists, there is adopted a network configuration method characterized in that the management node has information about all the nodes in the network and their adjacent nodes, and when a node outside the network connects to the network, it is notified by the management node of an optimum node to connect to. According to this method, a node newly participating into the network can know the most appropriate node to connect to, so that it is advantageously possible to connect to an optimum node in accordance with a particular operation policy.
(2) The network configuration method according to (1) described above is adopted which is characterized in that the management node selects a node to be notified to a node newly participating into the network as a node to connect to in order to optimize the network configuration. According to this method, the management node can notify a newly participating node of a node to connect to, in accordance with a particular operation policy, so that it is advantageously possible to optimize the network topology.
(3) The network configuration method according to (1) described above is adopted which is characterized in that the node participating into the network establishes connection in accordance with the notified node. According to this method, the management node can construct a network in accordance with a particular network operation policy, so that it is advantageously possible to construct an optimum network topology suitable for the network condition.

As described above, by notifying node-to-node connection information, information about links between adjacent node devices to a management node device managing a network as necessary, it is advantageously possible for the management node device to always know the node-to-node connection information and to select the most appropriate node to connect to in accordance with a particular operation policy.

Furthermore, by selecting, in response to receiving a request to connect to the network from a different node device, the most appropriate node for the node device to connect to, the management node can advantageously select the most appropriate node to connect to in accordance with a particular operation policy.

Furthermore, when forming a tree-type topology network which is configured by connecting nodes hierarchically and sequentially from a center node with the maximum number of connections for one node as m, it is determined whether there is any node with the number of connections of or less than m in the n-th hierarchy from the center node; a direction is given, if there is a node with the number of connections of or less than m, to connect to the node; and the same determination is performed for the (n+1) th hierarchy if there is not a node with the number of connections of or less than m. Thereby, it is advantageously possible to construct a complete tree-type topology in which the number of hops between any two nodes, for all the nodes, is the minimum.

Furthermore, when forming a tree-type topology network which is configured by connecting nodes hierarchically and sequentially from a center node with the maximum number of connections for one node as m, it is determined whether there is any node with the number of connections of or less than m in the n-th hierarchy from the center node. If there is a node with the number of connections of or less than m, the node is specified as a connection target. If there is not a node with the number of connections of or less than m, it is determined whether there is any node connected to a node in the n-th hierarchy from the center node and located farther from the node in the n-th hierarchy than a newly connecting node. If there is such a node, a direction is given to disconnect the farther node and connect the newly connecting node instead. If there is not such a node, the same determination is performed for the (n+1) th hierarchy. Thereby, it is advantageously possible to construct, in consideration of physical distances, a topology in which the number of hops between any two nodes is the minimum and no loop is created.

Furthermore, a node with the smallest number of connections is found. If there is a single such node, the node is specified as a connection target of a newly connecting node. If there are multiple such nodes, any node among the nodes is specified as a connection target of the newly connecting node. Thereby, it is advantageously possible to construct a topology which certainly creates a loop in which the number of hops between any two nodes, for all the nodes, is the minimum.

Furthermore, it is determined whether a node which is the n-th nearest to a newly connecting node has already received two or more connections from other nodes. If the node has not been newly connected to by two ore more nodes, the node is specified as a connection target. If the node has been newly connected to by two or more nodes, a node is looked for, which is located farther from the node which is the n-th nearest to the newly connecting node than the newly connecting node, among the nodes connected to the node which is the n-th nearest to the newly connecting node. If the farther node is found, a direction is given to disconnect the farther node and connect the newly connecting node instead. If the farther node is not found, the same procedure is repeated for a node which is the (n+1) th nearest to the newly connecting node. Thereby, it is advantageously possible to construct a topology which certainly creates a loop in which the number of hops between any two nodes is the minimum in consideration of physical distances.

Anode which newly participates into a network is connected to the network by connecting to the connection target selected and specified by the management node. This advantageously makes it possible for the node which newly participates into the network to know the most appropriate node to connect to in accordance with a particular operation policy.

In a network configuration management system comprising node devices constituting a network together with other node devices and a management node device for managing the network constituted by the node devices, each of the node devices constituting the network notifies node-to-node connection information, information about links with adjacent nodes, to the management node device as necessary;
the management node device, in response to receiving a request to connect to the network from a different node device, selects an optimum connection target for the node device; and
a node device which newly connects to the network is connected to the network by connecting to the connection target selected and specified by the management node device. Thereby, it is advantageously possible for the management node to always know the node-to-node connection information and select the most appropriate node to connect to in accordance with a particular operation policy, and for a node which newly participates into the network to know the most appropriate node to connect to in accordance with a particular operation policy.

Furthermore, in response to a request to search for a route from a first node in the network to a second node, the management node calculates route information, based on the network configuration information, indicating a route between the nodes and notifies the calculated route information to a request source. This advantageously makes it possible for the nodes participating in the network to communicate with one another utilizing the route information.

Node trees are created by following the network with a start node and a target node as origins, respectively, and routes to identical nodes appearing in the created node trees are determined as the route information. Thereby, it is advantageously possible to easily calculate the shortest route. Costs among nodes included in the network are calculated and a route for which the calculatedcost is the lowest is determined as the route information. Thereby, it is advantageously possible to easily calculate a route with the lowest cost.

Furthermore, if a first node and a second node are not able to directly communicate with each other, the management node calculates route information showing a bypass route via a node other than the nodes. This advantageously makes it possible to perform communication utilizing a bypass route even when nodes participating in the network cannot directly communicate with each other. The network configuration information includes identification information about nodes participating in the network and identification information about nodes adjacent to the nodes. This advantageously makes it possible for the management node to recognize the configuration of the network it manages.

Furthermore, the management node, in response to a notification of participation into the network by any node, adds and holds identification information about the node. This advantageously makes it possible to automatically update the network configuration information which is to be updated when a new node participates. A node which participates into the network notifies identification information about the node to the management node, and this advantageously makes it possible for the management node to recognize the participation of the new node and automatically update the network configuration information.

Furthermore, the management node, in response to a pulling-out notification from a node participating in the network, updates contents it holds based on identification information about the pulling-out node, and notifies the held contents which have been updated to a node adjacent to the pulling-out node. This advantageously makes it possible to automatically update the network configuration information which is to be updated when a node pulls out.

As described above, by utilizing the management node device of the present invention, it is advantageously possible to effectively manage a network.

## Claims

1. A management node device (401) for managing a network constituted by nodes (301-1, 301-2, 301-3), the management node device (401) comprising:
holding means (403) for holding network configuration information for calculating information about routes among nodes (301-1, 301-2, 301-3) for the nodes (301-1, 301-2, 301-3) connected to the network to communicate with one another and/or node information about a node with the smallest number of connected nodes for a node to be newly connected to the network;
receiving means (402) for receiving a request to search for a route from a first node (301-1, 301-2, 301-3) in the network to a second node (301-1, 301-2, 301-3);
calculation means (406) for, in response to the request to search for a route, calculating route information indicating a route between the first node (301-1, 301-2, 301-3) and the second node (301-1, 301-2, 301-3) and the second node (301-1, 301-2, 301-3) based on the network configuration information held in the holding means (403); and
notification means (407) for notifying the route information calculated by the calculation means (406) to a request source,
**characterized in that**
the network configuration information includes identification information of an adjacent node (301-1, 301-2, 301-3) adjacently connected to each of the nodes (301-1, 301-2, 301-3); wherein
the calculation means (406) is adapted to create node trees in the network with the first node (301-1, 301-2, 301-3) and the second node (301-1, 301-2, 301-3) as origins, respectively, counts the number of hops from the origins, respectively, until reaching an identical node in the network, and sets the node trees from the first node (301-1, 301-2, 301-3) through the identical node to the second node (301-1, 301-2, 301-3) as the route information that is the shortest path with the smallest hop number between the first node (301-3, 301-2, 301-3) and the second node (301-1, 301-2, 301-3).

2. The management node device (401) according to claim 1, **characterized in that** the calculation means (406) is adapted to calculate each of costs among nodes included in the network and determine a route for which the calculated cost is the lowest as the route information.

3. The management node device (401) according to claim 1, **characterized in that** the calculation means (406), if the first node (301-1, 301-2, 301-3) and the second node (301-1, 301-2, 301-3) are not able to directly communicate with each other, is adapted to calculate route information showing a bypass route via another node (301-1, 301-2, 301-3).

4. The management node device (401) according to claim 1, **characterized in that** the network configuration information includes identification information about the nodes (301-1, 301-2, 301-3) connected to the network and identification information about adjacent nodes (301-1, 301-2, 301-3) adjacent to the nodes (301-1, 301-2, 301-3).

5. The management node device (401) according to claim 1, **characterized by** further comprising means for, in response to a notification of connection to the network by any node (301-1, 301-2, 301-3), adding identification information about the node (301-1, 301-2, 301-3) to the holding means (403).

6. The management node device (401) according to claim 1, **characterized by** further comprising means for, in response to a disconnection notification from a node (301-1, 301-2, 301-3) connected to the network, updating contents held by the holding means (403) based on identification information about a disconnected node (301-1, 301-2, 301-3); and notifying the held contents which have been updated to a node (301-1, 301-2, 301-3) adjacent to the disconnected node (301-1, 301-2, 301-3).

7. The management node device (401) according to claim 1, the management node device (401) being **characterized by** further comprising selection means (406) for, in response to receiving a connection request to be connected to the network from a different node (301-1, 301-2, 301-3), selecting a connection target with the smallest number of connected nodes for the node (301-1, 301-2, 301-3) based on the network configuration information held in the holding means (403).

8. The management node device (401) according to claim 7, **characterized in that** the selection means (406), when a tree-type topology network is configured by the nodes hierarchically and sequentially from a center node located at the center of the network with the maximum number of connections for each of the nodes as m, wherein m is a natural number, is adapted to:
determine whether there is any node with the number of connections less than m in the n-th hierarchy, wherein n is a natural number, from the center node;
give a direction, if there is said any node with the number of connections less than m, to be connected to the node; and
perform the same determination for the (n+1)th hierarchy if there is not a node with the number of connections less than m.

9. The management node device (401) according to claim 7, **characterized in that** the selection means (406), when a tree-type topology network is configured by the nodes hierarchically and sequentially from a center node located at the center of the network with the maximum number of connections for each of the nodes as m, wherein m is a natural number, is adapted to:
determine whether there is any node with the number of connections less than m in the n-th hierarchy from the center node;
specify, if there is said any node with the number of connections less than m, the node as a connection target;
determine whether there is any node connected in the n-th hierarchy from the center node and located farther from the node in the n-th hierarchy than the node to be newly connected to the network, if there is not a node with the number of connections less than m;
give a direction, if there is said any node, to disconnect said any node (301-1, 301-2, 301-3) and connect the node (301-1, 301-2, 301-3) to be newly connected to the network instead; and
perform the same determination for the (n+1)th hierarchy if there is not said any node (301-1, 301-2, 301-3).

10. The management node device (401) according to claim 7, **characterized in that** the selection means (406) is adapted to:
find a node with the smallest number of connected nodes;
specify, if there is a single node with the smallest number of connected nodes, the node as a connection target of the node to be newly connected to the network; and
specify, if there are multiple nodes with the smallest number of connected nodes, any node among said multiple nodes as a connection target of the node to be newly connected to the network.

11. The management node device (401) according to claim 7, **characterized in that** the selection means (406) is adapted to:
determine whether a node which is the n-th nearest to the node to be newly connected to the network has already had two or more connections from other nodes;
specify, if the node has not had two or more connections, the node as a connection target;
look for, if the node has had two or more connections, a node located farther from the node which is the n-th nearest to the node to be newly connected to the network among nodes connected to the node which is the n-th nearest to the node to be newly connected to the network;
give a direction to disconnect the node located farther and connect the node to be newly connected to the network instead, if the node located farther is found; and
repeat the same procedure for a node which is the (n+1)th nearest to the node to be newly connected to the network, if the node located farther is not found.

## Patentansprüche

1. Managementknotenvorrichtung (401) für das Management eines Netzes, das durch Knoten (301-1, 301-2, 301-3) gebildet ist, wobei die Managementknotenvorrichtung (401) umfasst:
Haltemittel (403), um Netzkonfigurationsinformationen zum Berechnen von Informationen über Wege zwischen Knoten (301-1, 301-2, 301-3) für die mit dem Netz verbundenen Knoten (301-1, 301-2, 301-3), damit sie miteinander kommunizieren, und/oder Knoteninformationen über einen Knoten mit der kleinsten Anzahl verbundener Knoten für einen neu mit dem Netz zu verbindenden Knoten zu halten;
Empfangsmittel (402), um eine Anforderung zum Suchen eines Wegs von einem ersten Knoten (301-1, 301-2, 301-3) im Netz zu einem zweiten Knoten (301-1, 301-2, 301-3) zu empfangen;
Berechnungsmittel (406), um in Reaktion auf die Anforderung zum Suchen eines Wegs Weginformationen, die einen Weg zwischen dem ersten Knoten (301-1, 301-2, 301-3) und dem zweiten Knoten (301-1, 301-2, 301-3) und dem zweiten Knoten (301-1, 301-2, 301-3) anhand der in den Haltemitteln (403) gehaltenen Netzkonfigurationsinformationen zu berechnen; und
Meldemittel (407), um die Weginformationen, die durch die Berechnungsmittel (406) berechnet werden, einer Anforderungsquelle zu melden,
**dadurch gekennzeichnet, dass**
die Netzkonfigurationsinformationen Identifizierungsinformationen eines benachbarten Knotens (301-1, 301-2, 301-3), der benachbart mit jedem der Knoten (301-1, 301-2, 301-3) verbunden ist, enthalten; wobei
die Berechnungsmittel (406) dazu ausgelegt sind, in dem Netz Knotenbäume zu erzeugen, in denen der erste Knoten (301-1, 301-2, 301-3) und der zweite Knoten (301-1, 301-2, 301-3) jeweilige Ausgangspunkte sind, die Anzahl von Sprüngen von den jeweiligen Ausgangspunkten zählen, bis derselbe Knoten im Netz erreicht ist, und die Knotenbäume von dem ersten Knoten (301-1, 301-2, 301-3) durch denselben Knoten zu dem zweiten Knoten (301-1, 301-2, 301-3) als die Weginformationen, die der kürzeste Pfad mit der kleinsten Anzahl von Sprüngen zwischen dem ersten Knoten (301-1, 301-2, 301-3) und dem zweiten Knoten (301-1, 301-2, 301-3) ist, festlegen.

2. Managementknotenvorrichtung (401) nach Anspruch 1, **dadurch gekennzeichnet, dass** die Berechnungsmittel (406) dazu ausgelegt sind, die jeweiligen Kosten unter den Knoten, die in dem Netz enthalten sind, zu berechnen und einen Weg, für den die berechneten Kosten am niedrigsten sind, als die Weginformationen zu bestimmen.

3. Managementknotenvorrichtung (401) nach Anspruch 1, **dadurch gekennzeichnet, dass** die Berechnungsmittel (406) dann, wenn der erste Knoten (301-1, 301-2, 301-3) und der zweite Knoten (301-1, 301-2, 301-3) nicht direkt miteinander kommunizieren können, dazu ausgelegt sind, Weginformationen zu berechnen, die einen Umleitungsweg über einen weiteren Knoten (301-1, 301-2, 301-3) zeigen.

4. Management-Knoteninformationen (401) nach Anspruch 1, **dadurch gekennzeichnet, dass** die Netzkonfigurationsinformationen Identifizierungsinformationen über die mit dem Netz verbundenen Knoten (301-1, 301-2, 301-3) und Identifizierungsinformationen über benachbarte Knoten (301-1, 301-2, 301-3) benachbart zu den Knoten (301-1, 301-2, 301-3) enthalten.

5. Managementknotenvorrichtung (401) nach Anspruch 1, **dadurch gekennzeichnet, dass** sie ferner Mittel umfasst, um in Reaktion auf eine Meldung einer Verbindung mit dem Netz durch irgendeinen Knoten (301-1, 301-2, 301-3) Identifizierungsinformationen über den Knoten (301-1, 301-2, 301-3) zu den Haltemitteln (403) hinzuzufügen.

6. Managementknotenvorrichtung (401) nach Anspruch 1, **dadurch gekennzeichnet, dass** sie ferner Mittel umfasst, um in Reaktion auf eine Trennmeldung von einem mit dem Netz verbundenen Knoten (301-1, 301-2, 301-3) Inhalte, die von den Haltemitteln (403) gehalten werden, anhand von Identifizierungsinformationen über einen getrennten Knoten (301-1, 301-2, 301-3) zu aktualisieren; und die gehaltenen Inhalte, die aktualisiert worden sind, einem Knoten (301-1, 301-2, 301-3) benachbart zu dem getrennten Knoten (301-1, 301-2, 301-3) zu melden.

7. Managementknotenvorrichtung (401) nach Anspruch 1, wobei die Managementknotenvorrichtung (401) **dadurch gekennzeichnet ist, dass** sie ferner Auswahlmittel (406) umfasst, um in Reaktion auf den Empfang einer Verbindungsanforderung für eine Verbindung mit dem Netz von einem anderen Knoten (301-1, 301-2, 301-3) ein Verbindungsziel mit der kleinsten Anzahl verbundener Knoten für den Knoten (301-1, 301-2, 301-3) anhand der in den Haltemitteln (403) gehaltenen Netzkonfigurationsinformationen auszuwählen.

8. Managementknotenvorrichtung (401) nach Anspruch 7, **dadurch gekennzeichnet, dass** die Auswahlmittel (406) dann, wenn durch die Knoten hierarchisch und sequentiell ausgehend von einem zentralen Knoten, der sich in der Mitte eines Netzes befindet, eine Netztopologie des Baumtyps konfiguriert wird, wobei die maximale Anzahl von Verbindungen für jeden der Knoten gleich m ist und m eine natürliche Zahl ist, dazu ausgelegt sind:
zu bestimmen, ob irgendein Knoten mit einer Anzahl von Verbindungen kleiner als m in der n-ten Hierarchie von dem zentralen Knoten vorhanden ist, wobei n eine natürliche Zahl ist;
eine Richtung anzugeben, falls ein Knoten mit der Anzahl von Verbindungen kleiner als m vorhanden ist, der mit dem Knoten zu verbinden ist; und
die gleiche Bestimmung für die (n+1)-te Hierarchie auszuführen, falls kein Knoten mit einer Anzahl von Verbindungen kleiner als m vorhanden ist.

9. Managementknotenvorrichtung (401) nach Anspruch 7, **dadurch gekennzeichnet, dass** die Auswahlmittel (406) dann, wenn durch die Knoten hierarchisch und sequentiell ausgehend von einem zentralen Knoten, der sich in der Mitte eines Netzes befindet, eine Netztopologie des Baumtyps konfiguriert wird, wobei die maximale Anzahl von Verbindungen für jeden der Knoten gleich m ist und m eine natürliche Zahl ist, dazu ausgelegt sind:
zu bestimmen, ob irgendein Knoten mit einer Anzahl von Verbindungen kleiner als m in der n-ten Hierarchie von dem zentralen Knoten vorhanden ist;
den Knoten als ein Verbindungsziel zu spezifizieren, falls ein solcher Knoten mit einer Anzahl von Verbindungen kleiner als m vorhanden ist;
zu bestimmen, ob irgendein Knoten vorhanden ist, der in der n-ten Hierarchie von dem zentralen Knoten verbunden ist und sich in der n-ten Hierarchie weiter entfernt von dem Knoten als der neu mit dem Netz zu verbindende Knoten befindet, falls kein Knoten mit einer Anzahl von Verbindungen kleiner als m vorhanden ist;
eine Richtung anzugeben, falls ein solcher Knoten vorhanden ist, um diesen Knoten (301-1, 301-2, 301-3) zu trennen und stattdessen den neu mit dem Netz zu verbindenden Knoten (301-1, 301-2, 301-3) zu verbinden; und
die gleiche Bestimmung für die (n+1)-te Hierarchie auszuführen, falls kein solcher Knoten (301-1, 301-2, 301-3) vorhanden ist.

10. Managementknotenvorrichtung (401) nach Anspruch 7, **dadurch gekennzeichnet, dass** die Auswahlmittel (406) dazu ausgelegt sind:
einen Knoten mit der kleinsten Anzahl verbundener Knoten zu ermitteln;
den Knoten als ein Verbindungsziel des neu mit dem Netz zu verbindenden Knotens zu spezifizieren, falls ein einzelner Knoten mit der kleinsten Anzahl verbundener Knoten vorhanden ist; und
irgendeinen Knoten unter mehreren Knoten als ein Verbindungsziel des neu mit dem Netz zu verbindenden Knotens zu spezifizieren, falls mehrere Knoten mit der kleinsten Anzahl verbundener Knoten vorhanden sind.

11. Managementknotenvorrichtung (401) nach Anspruch 7, **dadurch gekennzeichnet, dass** die Auswahlmittel (406) dazu ausgelegt sind:
zu bestimmen, ob ein Knoten, der der n-te nächste Knoten für den neu mit dem Netz zu verbindenden Knoten ist, bereits zwei oder mehr Verbindungen von anderen Knoten gehabt hat;
den Knoten als ein Verbindungsziel zu spezifizieren, falls der Knoten nicht zwei oder mehr Verbindungen gehabt hat;
einen Knoten, der sich weiter entfernt von dem Knoten befindet, der der n-te nächste Knoten zu dem neu mit dem Netz zu verbindende Knoten ist, unter Knoten, die mit dem Knoten verbunden sind, der der n-te nächste Knoten zu dem neu mit dem Netz zu verbindenden Knoten ist, zu suchen, falls der Knoten zwei oder mehr Verbindungen gehabt hat;
eine Richtung zum Trennen des weiter entfernten Knotens und stattdessen zum Verbinden des neu mit dem Netz zu verbindenden Knotens anzugeben, falls der weiter entfernte Knoten gefunden wird; und
die gleiche Prozedur für einen Knoten zu wiederholen, der der (n+1)-te nächste Knoten zu dem neu mit dem Netz zu verbindenden Knoten ist, falls der weiter entfernte Knoten nicht gefunden wird.

## Revendications

1. Un dispositif de gestion de noeuds (401) pour gérer un réseau constitué par des noeuds (301-1, 301-2, 301-3), le dispositif de gestion de noeuds (401) comprenant :
des moyens de maintien (403) pour maintenir une information de configuration du réseau pour calculer l'information au sujet des chemins parmi les noeuds (301-1, 301-2, 301-3) pour les noeuds (301-1, 301-2, 301-3) connectés au réseau afin de communiquer avec un autre, et/ou l'information des noeuds au sujet d'un noeud ayant le plus petit nombre de noeuds connectés pour un noeud à nouvellement connecter au réseau;
des moyens de réception (402) pour recevoir une requête de recherche d'un chemin depuis un premier noeud (301-1, 301-2, 301-3) dans le réseau à un second noeud (301-1, 301-2, 301-3);
des moyens de calcul (406) pour, en réponse à la requête de recherche d'un chemin, calculer l'information du chemin en indiquant un chemin entre le premier noeud (301-1, 301-2, 301-3) et le second noeud (301-1, 301-2, 301-3), et le second noeud (301-1, 301-2, 301-3) sur la base de l'information de configuration du réseau gardée dans les moyens de maintien (403); et
des moyens de notification (407) pour notifier l'information du chemin calculée par les moyens de calcul (406) à une source de requête,
**caractérisé en ce que**
l'information de configuration du réseau comprend une information d'identification d'un noeud adjacent (301-1, 301-2, 301-3), qui est connecté de manière adjacente à chacun des noeuds (301-1, 301-2, 301-3); pour lequel
les moyens de calcul (406) sont adaptés pour créer des arbres de noeuds dans le réseau avec le premier noeud (301-1, 301-2, 301-3) et le second noeud (301-1, 301-2, 301-3) comme origines respectivement, comptent le nombre de sauts depuis les origines respectivement, jusqu'à atteindre un noeud identique dans le réseau, et établissent les arbres de noeuds depuis le premier noeud (301-1, 301-2, 301-3) à travers le noeud identique au second noeud (301-1, 301-2, 301-3) comme l'information du chemin, qui est le plus court chemin avec le plus petit nombre de sauts entre le premier noeud (301-1, 301-2, 301-3) et le second noeud (301-1, 301-2, 301-3).

2. Le dispositif de gestion de noeuds (401) selon la revendication 1, **caractérisé en ce que** les moyens de calcul (406) sont adaptés pour calculer chacun des coûts parmi les noeuds compris dans le réseau et déterminent un chemin pour lequel le coût calculé est le plus bas comme l'information du chemin.

3. Le dispositif de gestion de noeuds (401) selon la revendication 1, **caractérisé en ce que** les moyens de calcul (406), si le premier noeud (301-1, 301-2, 301-3) et le second noeud (301-1, 301-2, 301-3) ne sont pas capables de communiquer directement avec chaque autre, sont adaptés pour calculer l'information des chemins montrant un chemin de contournement par l'intermédiaire d'un autre noeud (301-1, 301-2, 301-3).

4. Le dispositif de gestion de noeuds (401) selon la revendication 1, **caractérisé en ce que** l'information de configuration du réseau comprend une information d'identification au sujet des noeuds (301-1, 301-2, 301-3) connectés au réseau et une information d'identification au sujet de noeuds adjacents (301-1, 301-2, 301-3), qui sont adjacents aux noeuds (301-1, 301-2, 301-3).

5. Le dispositif de gestion de noeuds (401) selon la revendication 1, **caractérisé en ce qu'**il comprend en plus des moyens pour, en réponse à une notification de connexion au réseau par n'importe quel noeud (301-1, 301-2, 301-3), ajouter une information d'identification au sujet du noeud (301-1, 301-2, 301-3) aux moyens de maintien (403).

6. Le dispositif de gestion de noeuds (401) selon la revendication 1, **caractérisé en ce qu'**il comprend en plus des moyens pour, en réponse à une notification de déconnexion d'un noeud (301-1, 301-2, 301-3) connecté au réseau, mettre à jour les contenus gardés par les moyens de maintien (403) sur la base d'une information d'identification au sujet d'un noeud déconnecté (301-1, 301-2, 301-3); et notifier les contenus gardés, qui ont été mis à jour à un noeud (301-1, 301-2, 301-3) adjacent au noeud déconnecté (301-1, 301-2, 301-3).

7. Le dispositif de gestion de noeuds (401) selon la revendication 1, le dispositif de gestion de noeuds (401) étant **caractérisé en ce qu'**il comprend en plus des moyens de sélection (406) pour, en réponse à la réception d'une requête de connexion pour être connecté au réseau depuis un noeud différent (301-1, 301-2, 301-3), sélectionner une cible de connexion avec le plus petit nombre de noeuds connectés pour le noeud (301-1, 301-2, 301-3) sur la base de l'information de configuration du réseau gardée dans les moyens de maintien (403).

8. Le dispositif de gestion de noeuds (401) selon la revendication 7, **caractérisé en ce que** les moyens de sélection (406), quand un réseau à topologie du type arbre est configuré par les noeuds de manière hiérarchique et séquentielle depuis un noeud du centre situé au centre du réseau avec le nombre maximum de connexions pour chacun des noeuds comme m, pour lequel m est un nombre naturel, sont adaptés à :
déterminer s'il y a n'importe quel noeud avec le nombre de connexions inférieur à m dans la n-ième hiérarchie, pour lequel n est un nombre naturel, depuis le noeud du centre;
donner une direction, s'il y a n'importe quel noeud avec le nombre de connexions inférieur à m, pour être connecté au noeud; et
effectuer la même détermination pour la (n+1)-ième hiérarchie, s'il n'y a pas un noeud avec le nombre de connexions inférieur à m.

9. Le dispositif de gestion de noeuds (401) selon la revendication 7, **caractérisé en ce que** les moyens de sélection (406), quand un réseau à topologie du type arbre est configuré par les noeuds de manière hiérarchique et séquentielle depuis un noeud du centre situé au centre du réseau avec le nombre maximum de connexions pour chacun des noeuds comme m, pour lequel m est un nombre naturel, sont adaptés à :
déterminer s'il y a n'importe quel noeud avec le nombre de connexions inférieur à m dans la n-ième hiérarchie depuis le noeud du centre;
spécifier s'il y a n'importe quel noeud avec le nombre de connexions inférieur à m, le noeud en tant que cible de connexion;
déterminer s'il y a n'importe quel noeud connecté dans la n-ième hiérarchie depuis le noeud du centre et situé plus loin du noeud dans la n-ième hiérarchie que le noeud à nouvellement connecter au réseau, s'il n'y a pas un noeud avec le nombre de connexions inférieur à m;
donner une direction, s'il y a n'importe quel noeud à déconnecter de n'importe quel noeud (301-1, 301-2, 301-3) et connecter à la place le noeud (301-1, 301-2, 301-3) à nouvellement connecter au réseau; et
effectuer la même détermination pour la (n+1)-ième hiérarchie, s'il n'y a pas n'importe quel noeud (301-1, 301-2, 301-3).

10. Le dispositif de gestion de noeuds (401) selon la revendication 7, **caractérisé en ce que** les moyens de sélection (406) sont adaptés à :
trouver un noeud avec le plus petit nombre de noeuds connectés;
spécifier s'il y a un unique noeud avec le plus petit nombre de noeuds connectés, le noeud en tant que cible de connexion du noeud à nouvellement connecter au réseau; et
spécifier s'il y a plusieurs noeuds avec le plus petit nombre de noeuds connectés, n'importe quel noeud parmi lesdits noeuds en tant qu'une cible de connexion du noeud à nouvellement connecter au réseau.

11. Le dispositif de gestion de noeuds (401) selon la revendication 7, **caractérisé en ce que** les moyens de sélection (406) sont adaptés à :
déterminer si un noeud, qui est le n-ième le plus proche du noeud à nouvellement connecter au réseau, a déjà eu deux ou plus de connexions depuis d'autres noeuds ;
spécifier si le noeud n'a pas eu deux ou plus de connexions, le noeud en tant qu'une cible de connexion;
chercher si le noeud a eu deux ou plus de connexion, un noeud situé plus loin du noeud qui est le n-ième le plus proche du noeud à nouvellement connecter au réseau parmi les noeuds connecté au noeud qui est le n-ième plus proche du noeud à nouvellement connecter au réseau;
donner une direction pour déconnecter le noeud situé le plus loin et connecter à la place le noeud à nouvellement connecter au réseau, si le noeud situé le plus loin est trouvé; et
répéter la même procédure pour un noeud, qui est le (n+1)-ième plus proche du noeud à nouvellement connecter au réseau, si le noeud situé le plus loin n'est pas trouvé.
